(19) **Europäisches Patentamt** **European Patent Office** **Office européen des brevets**

(11) **EP 4 614 822 A1**

(12) **EUROPEAN PATENT APPLICATION**
published in accordance with Art. 153(4) EPC

(43) Date of publication:
**10.09.2025 Bulletin 2025/37**

(21) Application number: **23886229.6**

(22) Date of filing: **31.10.2023**

(51) International Patent Classification (IPC):
*H04B 7/0408* (2017.01)    *H04B 7/06* (2006.01)
*H04B 7/08* (2006.01)    *H04B 17/318* (2015.01)

(52) Cooperative Patent Classification (CPC):
H04B 7/0408; H04B 7/06; H04B 7/08;
H04B 17/318; H04W 24/08; H04W 24/10;
H04W 72/04; H04W 72/21; H04W 72/23

(86) International application number:
**PCT/KR2023/017164**

(87) International publication number:
**WO 2024/096533 (10.05.2024 Gazette 2024/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.10.2022  KR 20220142906**

(71) Applicants:
• **Hyundai Motor Company**
  **Seoul 06797 (KR)**
• **Kia Corporation**
  **Seoul 06797 (KR)**
• **Seoul National University R&DB Foundation**
  **Seoul 08826 (KR)**

(72) Inventors:
• **HAHN, Gene Back**
  **Hwaseong-si, Gyeonggi-do 18280 (KR)**
• **LEE, Jeong Su**
  **Hwaseong-si, Gyeonggi-do 18280 (KR)**
• **KIM, Bum Jun**
  **Seoul 08826 (KR)**
• **CHOI, Wan**
  **Seoul 08826 (KR)**
• **KWON, Jeonghyeon**
  **Seoul 08826 (KR)**

(74) Representative: **Isarpatent**
**Patent- und Rechtsanwälte**
**Barth Hassa Peckmann & Partner mbB**
**Friedrichstraße 31**
**80801 München (DE)**

(54) **METHOD AND DEVICE FOR BEAM MANAGEMENT IN WIRELESS COMMUNICATION SYSTEM**

(57)    A method for beam adjustment in a base station disclosed herein may comprise the steps of: allocating a first resource for transmitting candidate beams determined on the basis of the number of sweeps and the number of subcarriers of which beams are squinted in an angle search space; transmitting, to a terminal, first resource information indicating the allocated first resource; mapping beam indexes to each of the candidate beams; transmitting, to the terminal, information about the beam indexes mapped to each of the candidate beams; transmitting a reference signal by using the first resource; receiving reception quality information for the reference signal from the terminal; and determining a transmission beam on the basis of the reception quality information.

[FIG. 11]

**Description**

[Technical Field]

The present disclosure relates to enhanced communication techniques, and more particularly, to beam management techniques in a wireless communication system.

[Background Art]

A communication network (e.g. 5G communication network or 6G communication network) is being developed to provide enhanced communication services compared to the existing communication networks (e.g. long term evolution (LTE), LTE-Advanced (LTE-A), etc.). The 5G communication network (e.g. New Radio (NR) communication network) can support frequency bands both below 6GHz and above 6GHz. In other words, the 5G communication network can support both a frequency region 1 (FR1) and/or FR2 bands. Compared to the LTE communication network, the 5G communication network can support various communication services and scenarios. For example, usage scenarios of the 5G communication network may include enhanced Mobile BroadBand (eMBB), Ultra Reliable Low Latency Communication (URLLC), massive Machine Type Communication (mMTC), and the like.

The 6G communication network can support a variety of communication services and scenarios compared to the 5G communication network. The 6G communication network can meet the requirements of hyper-performance, hyper-bandwidth, hyper-space, hyper-precision, hyper-intelligence, and/or hyper-reliability. The 6G communication network can support diverse and wide frequency bands and can be applied to various usage scenarios such as terrestrial communication, non-terrestrial communication, sidelink communication, and the like.

Meanwhile, in the 5G NR, operating bands are defined as being divided into FR1 bands n1 to n99 and FR2 bands n257 to n262. Additionally, the 5G NR has introduced and employed beamforming techniques to address a path loss issue that occurs when using higher frequency bands, such as FR2, and to effectively deliver desired information in specific directions.

According to the 5G NR standards, a beam management procedure for beamforming consists of an initial beam establishment process, which selects a wide beam by combining a synchronization signal block (SSB) time index and a RACH occasion; a beam adjustment process, which refines a narrower precise beam after the initial beam establishment process; and a beam recovery process, which selects a new beam when a beam misalignment causes performance degradation.

In the initial beam establishment and beam adjustment processes, a base station or a terminal sequentially changes its beams one by one based on beam sweeping, measures performance of its candidate beams, and identifies the optimal beam. Since only one beam is formed at a time for performance measurement during beam sweeping, the existing beam management approach requires a time proportional to the number of candidate beams formed by the base station and the terminal to identify the optimal beam.

In future 6G communication systems, it is expected that millimeter-wave unlicensed bands or terahertz bands will be utilized to achieve ultra-high capacity, ultra-wideband, and ultra-low latency communication services. When using extremely high-frequency bands in 6G communications, it is expected that more antennas than in the 5G NR will be employed to form highly directional beams to address the significant path loss issues inherent in high-frequency bands.

Furthermore, if the 6G employs more antennas than 5G NR, beams narrower than those used in the beam management processes of 5G NR are expected to be formed, requiring a greater number of SSB/CSI-RS candidate beams. If the current 5G NR beam sweeping scheme is used to identify the optimal beam in 6G systems, significantly more time resources may be needed compared to 5G, potentially leading to a substantial increase in time overhead.

Therefore, in 6G communication systems, which require a higher level of ultra-low latency communication, the current 5G NR beam management procedure is not suitable, and it is necessary to define a beam management procedure and required parameters tailored for low-latency communication in the terahertz band, which are different from those of the beam sweeping-based method of 5G NR.

[Disclosure]

[Technical Problem]

The present disclosure is directed to providing a method and an apparatus for beam management in a communication system using a high frequency band.

[Technical Solution]

A method of a base station, according to an exemplary embodiment of the present disclosure, may comprise: allocating first resources for transmitting candidate beams determined based on a number of subcarriers to be beam-squinted within an angular search space and a number of sweeps of beams formed using the subcarriers to be beam-squinted; transmitting first resource information indicating the allocated first resources to a user equipment (UE); mapping a beam index to each of the candidate beams; transmitting information on the beam index mapped to each of the candidate beams to the UE; transmitting a first reference signal through the candidate beams using the first resources; receiving reception quality information for the first reference signal from the UE; and determining a transmission beam based on the reception quality information.

The first resource information may indicate frequency resources and time resources, each of the frequency resources may correspond to a frequency of each of the subcarriers for forming the candidate beams, and each of the time resources may correspond to a transmission time of each of the candidate beams based on the number of sweeps.

Frequencies of the subcarriers may be configured so that a difference between frequencies of adjacent subcarriers has a same value.

When transmitting the first reference signal through the candidate beams, a time delay network (TDN) function may be controlled so that main lobes of the candidate beams do not overlap each other and angles between the candidate beams have a uniform angular difference.

Each of the first resource information allocated to the candidate beams and the information on the beam index mapped to each of the candidate beams may be transmitted to the UE using at least one of downlink control information (DCI), medium access control-control element (MAC-CE), or radio resource control (RRC) reconfiguration information.

The method may further comprise: receiving, from the UE, information on a number of candidate beams of the UE; determining second resources for transmitting a second reference signal based on the number of candidate beams of the UE; and transmitting the second reference signal to the UE using the determined second resources.

The method may further comprise, when the second reference signal is transmitted through the transmission beam, indicating that the transmission beam is fixed by using a repetition parameter among information elements of a reference signal resource set of RRC reconfiguration information, before transmitting the second reference signal to the UE.

The information on the number of candidate beams of the UE may be received using at least one of uplink control information (UCI), UE assistance information, or UE capability information.

A method of a user equipment (UE), according to an exemplary embodiment of the present disclosure, may comprise: receiving, from a base station, first resource information indicating first resources allocated to candidate beams transmitted by the base station; receiving information on a beam index mapped to each of the candidate beams from the base station; receiving a first signal from the base station through the candidate beams using a preconfigured reception beam, the first signal including a first reference signal and information on the beam index corresponding to each of the candidate beams; measuring a reception quality of the first reference signal received through each of the candidate beams; and transmitting, to the base station, information on the measured reception quality and information on an index of each of candidate beams corresponding to the measured reception quality, wherein the candidate beams may be determined based on a number of subcarriers to be beam-squinted within an angular search space and a number of sweeps of beams formed using the subcarriers to be beam-squinted.

The first resource information may indicate frequency resources and time resources, each of the frequency resources may correspond to a frequency of each of the subcarriers for forming the candidate beams, and each of the time resources may correspond to a transmission time of each of the candidate beams based on the number of sweeps.

Frequencies of the subcarriers may be configured so that a difference between frequencies of adjacent subcarriers has a same value.

Each of the first resource information allocated to the candidate beams and the information on the beam index indicated by the first signal received through each of the candidate beams may be received using at least one of downlink control information (DCI), medium access control-control element (MAC-CE), or radio resource control (RRC) reconfiguration information.

The method may further comprise: determining a UE candidate beam group by dividing the preconfigured reception beam into a plurality of subdivided beams; transmitting information on a number of beams of the UE candidate beam group to the base station; receiving a second reference signal using beams belonging to the UE candidate beam group; measuring signal qualities of the second reference signal; and determining a reception beam based on the measured signal qualities of the second reference signal.

The method may further comprise: receiving second information indicating that the transmission beam is fixed, before receiving the second reference signal.

The second information may be indicated using a repetition parameter among information elements of a reference signal resource set of RRC reconfiguration information.

The information on the number of candidate beams of the UE may be transmitted using at least one of uplink control information (UCI), UE assistance information, or UE capability information.

An user equipment (UE), according to an exemplary embodiment of the present disclosure, may comprise at least one processor, wherein the at least one processor causes the UE to perform: receiving, from a base station, first resource information indicating first resources allocated to candidate beams transmitted by the base station; receiving information on a beam index mapped to each of the candidate beams from the base station; receiving a first signal from the base station through the candidate beams using a preconfigured reception beam, the first signal including a first reference signal and information on the beam index corresponding to each of the candidate beams; measuring a reception quality of the first reference signal received through each of the candidate beams; and transmitting, to the base station, information on the measured reception quality and information on an index of each of candidate beams corresponding to the measured reception quality, wherein the candidate beams may be determined based on a number of subcarriers to be beam-squinted within an angular search space and a number of sweeps of beams formed using the subcarriers to be beam-squinted.

The first resource information may indicate frequency resources and time resources, each of the frequency resources may correspond to a frequency of each of the subcarriers for forming the candidate beams, and each of the time resources may correspond to a transmission time of each of the candidate beams based on the number of sweeps.

The at least one processor may further cause the UE to perform: determining a UE candidate beam group by dividing the preconfigured reception beam into a plurality of subdivided beams; transmitting information on a number of beams of the UE candidate beam group to the base station; receiving a second reference signal using beams belonging to the UE candidate beam group; measuring signal qualities of the second reference signal; and determining a reception beam based on the measured signal qualities of the second reference signal.

The at least one processor may further cause the UE to perform: receiving second information indicating that the transmission beam is fixed, before receiving the second reference signal, wherein the second information may be indicated using a repetition parameter among information elements of a reference signal resource set of RRC reconfiguration information.

[Advantageous Effects]

According to the present disclosure, multiple beams can be transmitted simultaneously in different directions using beam squint. By controlling angles of the simultaneously transmitted beams through a TDN function, the beam angles can be controlled to be uniform. Furthermore, when performing beam adjustment and beam recovery procedures using the simultaneously transmitted beams, beam adjustment and recovery can be performed more quickly.

[Description of Drawings]

FIG. 1 is a conceptual diagram illustrating a first exemplary embodiment of a communication system.
FIG. 2 is a block diagram illustrating a first exemplary embodiment of a communication node constituting a communication system.
FIG. 3 is a block diagram illustrating a first exemplary embodiment of communication nodes performing communication.
FIG. 4A is a block diagram illustrating a first exemplary embodiment of a transmission path.
FIG. 4B is a block diagram illustrating a first exemplary embodiment of a reception path.
FIG. 5 is a conceptual diagram illustrating a first exemplary embodiment of a system frame in a communication system.
FIG. 6 is a conceptual diagram illustrating a first exemplary embodiment of a subframe in a communication system.
FIG. 7 is a conceptual diagram illustrating a first exemplary embodiment of a slot in a communication system.
FIG. 8 is a conceptual diagram illustrating a first exemplary embodiment of a time-frequency resource in a communication system.
FIG. 9A is a conceptual diagram illustrating a beam squint phenomenon when a base station transmits beams using multiple antennas.
FIG. 9B is a conceptual diagram illustrating a case where squinted beams are aligned with a reference beam's direction when transmitting the beams using multiple antennas at a base station.
FIG. 10 is a conceptual diagram illustrating a case where a TDN function is dynamically controlled to form multiple beams simultaneously in desired directions when transmitting the beams using multiple antennas at a base station.
FIG. 11 is a conceptual diagram illustrating a case where a base station allocates transmission beam resources using beam squint.
FIG. 12 is a conceptual diagram illustrating an overall procedure for low-latency beam adjustment using beam squint.

FIG. 13 is a sequence chart illustrating a method for low-latency beam adjustment using beam squint.

FIG. 14 is a conceptual diagram illustrating an overall procedure for low-latency beam recovery using beam squint.

FIG. 15 is a sequence chart illustrating a low-latency beam adjustment method using beam squint.

[Mode for Invention]

Since the present disclosure may be variously modified and have several forms, specific exemplary embodiments will be shown in the accompanying drawings and be described in detail in the detailed description. It should be understood, however, that it is not intended to limit the present disclosure to the specific exemplary embodiments but, on the contrary, the present disclosure is to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

In the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

In the present disclosure, '(re)transmission' may refer to 'transmission', 'retransmission', or 'transmission and retransmission', '(re)configuration' may refer to 'configuration', 'reconfiguration', or 'configuration and reconfiguration', '(re)connection' may refer to 'connection', 'reconnection', or 'connection and reconnection', and '(re)access' may refer to 'access', 're-access', or 'access and re-access'.

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it will be understood that a further component is not disposed therebetween.

The terms used in the present disclosure are only used to describe specific exemplary embodiments, and are not intended to limit the present disclosure. The singular expression includes the plural expression unless the context clearly dictates otherwise. In the present disclosure, terms such as 'comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

Hereinafter, exemplary embodiments of the present disclosure will be described in detail with reference to the accompanying drawings. In describing the disclosure, to facilitate the entire understanding of the disclosure, like numbers refer to like elements throughout the description of the figures and the repetitive description thereof will be omitted. The operations according to the exemplary embodiments described explicitly in the present disclosure, as well as combinations of the exemplary embodiments, extensions of the exemplary embodiments, and/or variations of the exemplary embodiments, may be performed. Some operations may be omitted, and a sequence of operations may be altered.

Even when a method (e.g. transmission or reception of a signal) to be performed at a first communication node among communication nodes is described in exemplary embodiments, a corresponding second communication node may perform a method (e.g. reception or transmission of the signal) corresponding to the method performed at the first communication node. That is, when an operation of a user equipment (UE) is described, a base station corresponding thereto may perform an operation corresponding to the operation of the UE. Conversely, when an operation of a base station is described, a corresponding UE may perform an operation corresponding to the operation of the base station.

The base station may be referred to by various terms such as NodeB, evolved NodeB, next generation node B (gNodeB), gNB, device, apparatus, node, communication node, base transceiver station (BTS), radio remote head (RRH), transmission reception point (TRP), radio unit (RU), road side unit (RSU), radio transceiver, access point, access node, and the like. The user equipment (UE) may be referred to by various terms such as terminal, device, apparatus, node, communication node, end node, access terminal, mobile terminal, station, subscriber station, mobile station, portable subscriber station, on-board unit (OBU), and the like.

In the present disclosure, signaling may be one or a combination of two or more of higher layer signaling, MAC signaling, and physical (PHY) signaling. A message used for higher layer signaling may be referred to as a 'higher layer message' or 'higher layer signaling message'. A message used for MAC signaling may be referred to as a 'MAC message' or 'MAC signaling message'. A message used for PHY signaling may be referred to as a 'PHY message' or 'PHY signaling message'. The higher layer signaling may refer to an operation of transmitting and receiving system information (e.g. master information block (MIB), system information block (SIB)) and/or an RRC message. The MAC signaling may refer to an operation of transmitting and receiving a MAC control element (CE). The PHY signaling may refer to an operation of transmitting and receiving control information (e.g. downlink control information (DCI), uplink control information (UCI), or sidelink control information (SCI)).

In the present disclosure, 'configuration of an operation (e.g. transmission operation)' may refer to signaling of configuration information (e.g. information elements, parameters) required for the operation and/or information indicating to perform the operation. 'configuration of information elements (e.g. parameters)' may refer to signaling of the information elements. In the present disclosure, 'signal and/or channel' may refer to signal, channel, or both signal and channel, and 'signal' may be used to mean 'signal and/or channel'.

A communication network to which exemplary embodiments are applied is not limited to that described below, and the exemplary embodiments may be applied to various communication networks (e.g. 4G communication networks, 5G communication networks, and/or 6G communication networks). Here, 'communication network' may be used interchangeably with a term 'communication system'.

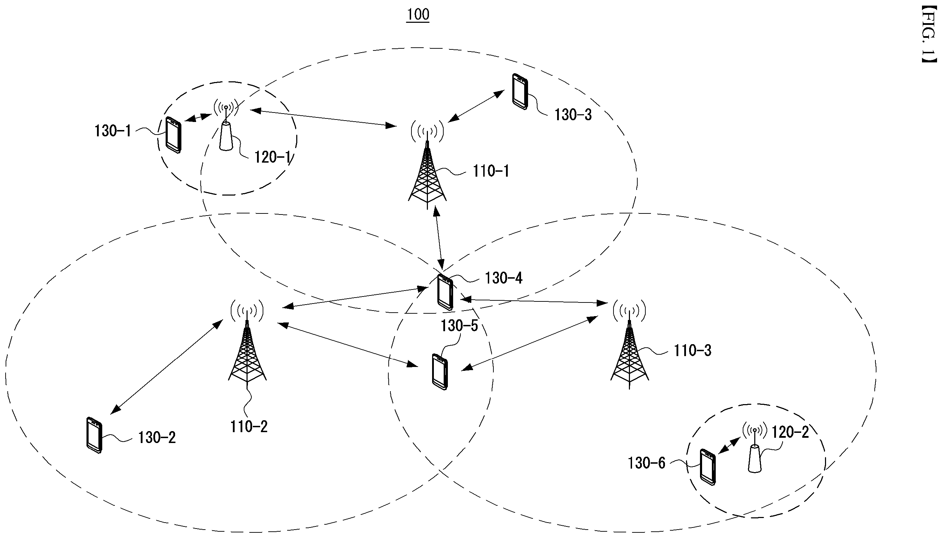

FIG. 1 is a conceptual diagram illustrating a first exemplary embodiment of a communication system.

As shown in FIG. 1, a communication system 100 may comprise a plurality of communication nodes 110-1, 110-2, 110-3, 120-1, 120-2, 130-1, 130-2, 130-3, 130-4, 130-5, and 130-6. In addition, the communication system 100 may further include a core network (e.g. a serving gateway (S-GW), a packet data network (PDN) gateway (P-GW), a mobility management entity (MME). When the communication system 100 is a 5G communication (e.g. NR system), the core network may include an access and mobility management function (AMF), a user plane function (UPF), a session management function (SMF), and the like.

The plurality of communication nodes 110 to 130 may support communication protocols (e.g. LTE communication protocol, LTE-A communication protocol, NR communication protocol, etc.) specified in 3rd generation partnership project (3GPP) standards. The plurality of communication nodes 110 to 130 may support a code division multiple access (CDMA) technique, a wideband CDMA (WCDMA) technique, a time division multiple access (TDMA) technique, a frequency division multiple access (FDMA) technique, an orthogonal frequency division multiplexing (OFDM) technique, a filtered OFDM technique, a cyclic prefix OFDM (CP-OFDM) technique, a discrete Fourier transform spread OFDM (DFT-s-OFDM) technique, an orthogonal frequency division multiple access (OFDMA) technique, a single carrier FDMA (SC-FDMA) technique, a non-orthogonal multiple access (NOMA) technique, a generalized frequency division multiplexing (GFDM) technique, a filter bank multi-carrier (FBMC) technique, a universal filtered multi-carrier (UFMC) technique, a space division multiple access (SDMA) technique, or the like. Each of the plurality of communication node may have the following structure.

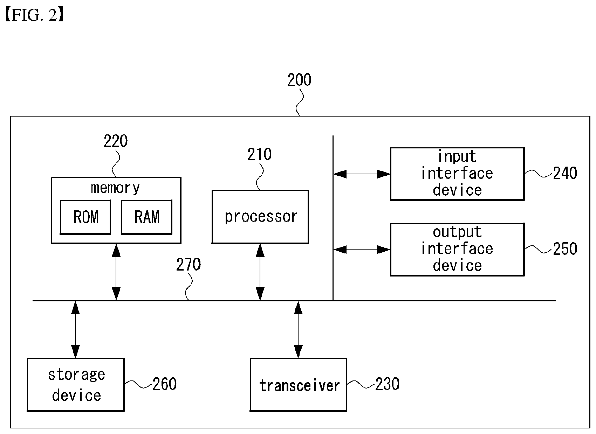

FIG. 2 is a block diagram illustrating a first exemplary embodiment of a communication node constituting a communication system.

As shown in FIG. 2, a communication node 200 may comprise at least one processor 210, a memory 220, and a transceiver 230 connected to the network for performing communications. Also, the communication node 200 may further comprise an input interface device 240, an output interface device 250, a storage device 260, and the like. Each component included in the communication node 200 may communicate with each other as connected through a bus 270.

The processor 210 may execute a program stored in at least one of the memory 220 and the storage device 260. The processor 210 may refer to a central processing unit (CPU), a graphics processing unit (GPU), or a dedicated processor on which methods in accordance with embodiments of the present disclosure are performed. Each of the memory 220 and the storage device 260 may be constituted by at least one of a volatile storage medium and a nonvolatile storage medium. For example, the memory 220 may comprise at least one of read-only memory (ROM) and random access memory (RAM).

Referring again to FIG. 1, the communication system 100 may comprise a plurality of base stations 110-1, 110-2, 110-3, 120-1, and 120-2, and a plurality of terminals 130-1, 130-2, 130-3, 130-4, 130-5, and 130-6. The communication system 100 including the base stations 110-1, 110-2, 110-3, 120-1, and 120-2 and the terminals 130-1, 130-2, 130-3, 130-4, 130-5, and 130-6 may be referred to as an 'access network'. Each of the first base station 110-1, the second base station 110-2, and the third base station 110-3 may form a macro cell, and each of the fourth base station 120-1 and the fifth base station 120-2 may form a small cell. The fourth base station 120-1, the third terminal 130-3, and the fourth terminal 130-4 may belong to cell coverage of the first base station 110-1. Also, the second terminal 130-2, the fourth terminal 130-4, and the fifth terminal 130-5 may belong to cell coverage of the second base station 110-2. Also, the fifth base station 120-2, the fourth terminal 130-4, the fifth terminal 130-5, and the sixth terminal 130-6 may belong to cell coverage of the third base station 110-3. Also, the first terminal 130-1 may belong to cell coverage of the fourth base station 120-1, and the sixth terminal 130-6 may belong to cell coverage of the fifth base station 120-2.

Here, each of the plurality of base stations 110-1, 110-2, 110-3, 120-1, and 120-2 may refer to a Node-B, evolved Node-B (eNB), gNB, advanced base station (ABS), high reliability-base station (HR-BS), base transceiver station (BTS), radio base station, radio transceiver, access point, access node, radio access station (RAS), mobile multihop relay-base station (MMR-BS), relay station (RS), advanced relay station (ARS), high reliability-relay station (HR-RS), home NodeB (HNB), home eNodeB (HeNB), road side unit (RSU), radio remote head (RRH), transmission point (TP), transmission and reception point (TRP), or the like.

Each of the plurality of terminals 130-1, 130-2, 130-3, 130-4, 130-5, and 130-6 may refer to a user equipment (UE), terminal equipment (TE), advanced mobile station (AMS), high reliability-mobile station (HR-MS), terminal, access terminal, mobile terminal, station, subscriber station, mobile station, portable subscriber station, node, device, on-board unit (OBU), or the like.

Meanwhile, each of the plurality of base stations 110-1, 110-2, 110-3, 120-1, and 120-2 may operate in the same frequency band or in different frequency bands. The plurality of base stations 110-1, 110-2, 110-3, 120-1, and 120-2 may be connected to each other via an ideal backhaul or a non-ideal backhaul, and exchange information with each other via the ideal or non-ideal backhaul. Also, each of the plurality of base stations 110-1, 110-2, 110-3, 120-1, and 120-2 may be connected to the core network through the ideal or non-ideal backhaul. Each of the plurality of base stations 110-1, 110-2, 110-3, 120-1, and 120-2 may transmit a signal received from the core network to the corresponding terminal 130-1, 130-2, 130-3, 130-4, 130-5, or 130-6, and transmit a signal received from the corresponding terminal 130-1, 130-2, 130-3, 130-4, 130-5, or 130-6 to the core network.

In addition, each of the plurality of base stations 110-1, 110-2, 110-3, 120-1, and 120-2 may support multi-input multi-output (MIMO) transmission (e.g. a single-user MIMO (SU-MIMO), multi-user MIMO (MU-MIMO), massive MIMO, or the like), coordinated multipoint (CoMP) transmission, carrier aggregation (CA) transmission, transmission in an unlicensed band, sidelink communication (e.g. device-to-device (D2D) communication, proximity services (ProSe)), Internet of Things (IoT) communication, dual connectivity (DC), and/or the like. Here, each of the plurality of terminals 130-1, 130-2, 130-3, 130-4, 130-5, and 130-6 may perform operations corresponding to the operations of the plurality of base stations 110-1, 110-2, 110-3, 120-1, and 120-2, and operations supported by the plurality of base stations 110-1, 110-2, 110-3, 120-1, and 120-2. For example, the second base station 110-2 may transmit a signal to the fourth terminal 130-4 in the SU-MIMO manner, and the fourth terminal 130-4 may receive the signal from the second base station 110-2 in the SU-MIMO manner. Alternatively, the second base station 110-2 may transmit a signal to the fourth terminal 130-4 and fifth terminal 130-5 in the MU-MIMO manner, and the fourth terminal 130-4 and fifth terminal 130-5 may receive the signal from the second base station 110-2 in the MU-MIMO manner.

The first base station 110-1, the second base station 110-2, and the third base station 110-3 may transmit a signal to the fourth terminal 130-4 in the CoMP transmission manner, and the fourth terminal 130-4 may receive the signal from the first base station 110-1, the second base station 110-2, and the third base station 110-3 in the CoMP manner. Also, each of the plurality of base stations 110-1, 110-2, 110-3, 120-1, and 120-2 may exchange signals with the corresponding terminals 130-1, 130-2, 130-3, 130-4, 130-5, or 130-6 which belongs to its cell coverage in the CA manner. Each of the base stations 110-1, 110-2, and 110-3 may control sidelink communications between the fourth terminal 130-4 and the fifth terminal 130-5, and thus the fourth terminal 130-4 and the fifth terminal 130-5 may perform the sidelink communications under control of the second base station 110-2 and the third base station 110-3, respectively.

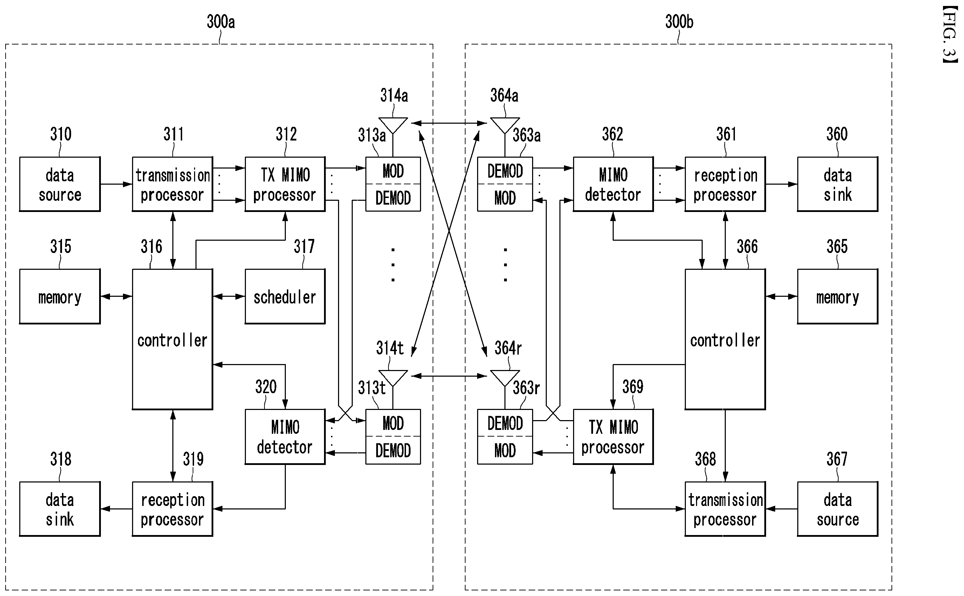

Meanwhile, communication nodes that perform communications in the communication network may be configured as follows. A communication node shown in FIG. 3 may be a specific exemplary embodiment of the communication node shown in FIG. 2.

FIG. 3 is a block diagram illustrating a first exemplary embodiment of communication nodes performing communication.

As shown in FIG. 3, each of a first communication node 300a and a second communication node 300b may be a base station or UE. The first communication node 300a may transmit a signal to the second communication node 300b. A transmission processor 311 included in the first communication node 300a may receive data (e.g. data unit) from a data source 310. The transmission processor 311 may receive control information from a controller 316. The control information may include at least one of system information, RRC configuration information (e.g. information configured by RRC signaling), MAC control information (e.g. MAC CE), or PHY control information (e.g. DCI, SCI).

The transmission processor 311 may generate data symbol(s) by performing processing operations (e.g. encoding operation, symbol mapping operation, etc.) on the data. The transmission processor 311 may generate control symbol(s) by performing processing operations (e.g. encoding operation, symbol mapping operation, etc.) on the control information. In addition, the transmission processor 311 may generate synchronization/reference symbol(s) for synchronization signals and/or reference signals.

A Tx MIMO processor 312 may perform spatial processing operations (e.g. precoding operations) on the data symbol(s), control symbol(s), and/or synchronization/reference symbol(s). An output (e.g. symbol stream) of the Tx MIMO processor 312 may be provided to modulators (MODs) included in transceivers 313a to 313t. The modulator may generate modulation symbols by performing processing operations on the symbol stream, and may generate signals by performing additional processing operations (e.g. analog conversion operations, amplification operation, filtering operation, up-conversion operation, etc.) on the modulation symbols. The signals generated by the modulators of the transceivers 313a to 313t may be transmitted through antennas 314a to 314t.

The signals transmitted by the first communication node 300a may be received at antennas 364a to 364r of the second communication node 300b. The signals received at the antennas 364a to 364r may be provided to demodulators (DEMODs) included in transceivers 363a to 363r. The demodulator (DEMOD) may obtain samples by performing processing operations (e.g. filtering operation, amplification operation, down-conversion operation, digital conversion operation, etc.) on the signals. The demodulator may perform additional processing operations on the samples to obtain symbols. A MIMO detector 362 may perform MIMO detection operations on the symbols. A reception processor 361 may perform processing operations (e.g. de-interleaving operation, decoding operation, etc.) on the symbols. An output of the reception processor 361 may be provided to a data sink 360 and a controller 366. For example, the data may be provided to the data sink 360 and the control information may be provided to the controller 366.

On the other hand, the second communication node 300b may transmit signals to the first communication node 300a. A transmission processor 368 included in the second communication node 300b may receive data (e.g. data unit) from a data source 367 and perform processing operations on the data to generate data symbol(s). The transmission processor 368 may receive control information from the controller 366 and perform processing operations on the control information to generate control symbol(s). In addition, the transmission processor 368 may generate reference symbol(s) by performing processing operations on reference signals.

A Tx MIMO processor 369 may perform spatial processing operations (e.g. precoding operations) on the data symbol(s), control symbol(s), and/or reference symbol(s). An output (e.g. symbol stream) of the Tx MIMO processor 369 may be provided to modulators (MODs) included in the transceivers 363a to 363t. The modulator may generate modulation symbols by performing processing operations on the symbol stream, and may generate signals by performing additional processing operations (e.g. analog conversion operation, amplification operation, filtering operation, up-conversion operations) on the modulation symbols. The signals generated by the modulators of the transceivers 363a to 363t may be transmitted through the antennas 364a to 364t.

The signals transmitted by the second communication node 300b may be received at the antennas 314a to 314r of the first communication node 300a. The signals received at the antennas 314a to 314r may be provided to demodulators (DEMODs) included in the transceivers 313a to 313r. The demodulator may obtain samples by performing processing operations (e.g. filtering operation, amplification operation, down-conversion operation, digital conversion operation) on the signals. The demodulator may perform additional processing operations on the samples to obtain symbols. A MIMO detector 320 may perform a MIMO detection operation on the symbols. The reception processor 319 may perform processing operations (e.g. de-interleaving operation, decoding operation, etc.) on the symbols. An output of the reception processor 319 may be provided to a data sink 318 and the controller 316. For example, the data may be provided to the data sink 318 and the control information may be provided to the controller 316.

Memories 315 and 365 may store the data, control information, and/or program codes. A scheduler 317 may perform scheduling operations for communication. The processors 311, 312, 319, 361, 368, and 369 and the controllers 316 and 366 shown in FIG. 3 may be the processor 210 shown in FIG. 2, and may be used to perform methods described in the present disclosure.

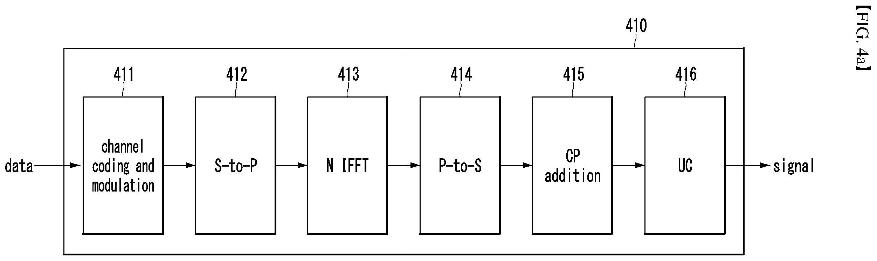

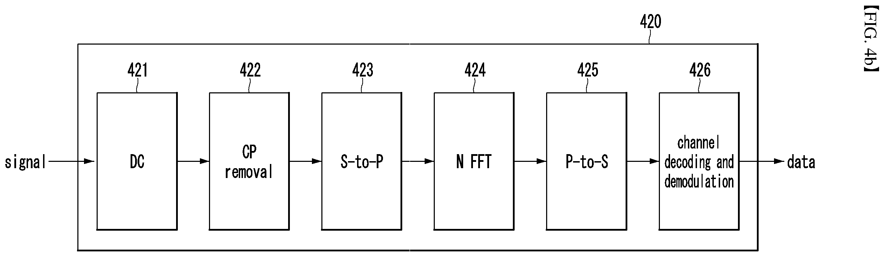

FIG. 4A is a block diagram illustrating a first exemplary embodiment of a transmission path, and FIG. 4B is a block diagram illustrating a first exemplary embodiment of a reception path.

As shown in FIGS. 4A and 4B, a transmission path 410 may be implemented in a communication node that transmits signals, and a reception path 420 may be implemented in a communication node that receives signals. The transmission path 410 may include a channel coding and modulation block 411, a serial-to-parallel (S-to-P) block 412, an N-point inverse fast Fourier transform (N-point IFFT) block 413, a parallel-to-serial (P-to-S) block 414, a cyclic prefix (CP) addition block 415, and up-converter (UC) 416. The reception path 420 may include a down-converter (DC) 421, a CP removal block 422, an S-to-P block 423, an N-point FFT block 424, a P-to-S block 425, and a channel decoding and demodulation block 426. Here, N may be a natural number.

In the transmission path 410, information bits may be input to the channel coding and modulation block 411. The channel coding and modulation block 511 may perform a coding operation (e.g. low-density parity check (LDPC) coding operation, polar coding operation, etc.) and a modulation operation (e.g. Quadrature Phase Shift Keying (OPSK), Quadrature Amplitude Modulation (QAM), etc.) on the information bits. An output of the channel coding and modulation block 411 may be a sequence of modulation symbols.

The S-to-P block 412 may convert frequency domain modulation symbols into parallel symbol streams to generate N parallel symbol streams. N may be the IFFT size or the FFT size. The N-point IFFT block 413 may generate time domain signals by performing an IFFT operation on the N parallel symbol streams. The P-to-S block 414 may convert the output (e.g., parallel signals) of the N-point IFFT block 413 to serial signals to generate the serial signals.

The CP addition block 415 may insert a CP into the signals. The UC 416 may up-convert a frequency of the output of the CP addition block 415 to a radio frequency (RF) frequency. Further, the output of the CP addition block 415 may be filtered in baseband before the up-conversion.

The signal transmitted from the transmission path 410 may be input to the reception path 420. Operations in the reception path 420 may be reverse operations for the operations in the transmission path 410. The DC 421 may down-convert a frequency of the received signals to a baseband frequency. The CP removal block 422 may remove a CP from the signals. The output of the CP removal block 422 may be serial signals. The S-to-P block 423 may convert the serial signals into parallel signals. The N-point FFT block 424 may generate N parallel signals by performing an FFT algorithm. The P-to-S block 425 may convert the parallel signals into a sequence of modulation symbols. The channel decoding and demodulation block 426 may perform a demodulation operation on the modulation symbols and may restore data by performing a decoding operation on a result of the demodulation operation.

In FIGS. 4A and 4B, discrete Fourier transform (DFT) and inverse DFT (IDFT) may be used instead of FFT and IFFT. Each of the blocks (e.g. components) in FIGS. 4A and 4B may be implemented by at least one of hardware, software, or firmware. For example, some blocks in FIGS. 4A and 4B may be implemented by software, and other blocks may be implemented by hardware or a combination of hardware and software. In FIGS. 4A and 4B, one block may be subdivided into a plurality of blocks, a plurality of blocks may be integrated into one block, some blocks may be omitted, and blocks supporting other functions may be added.

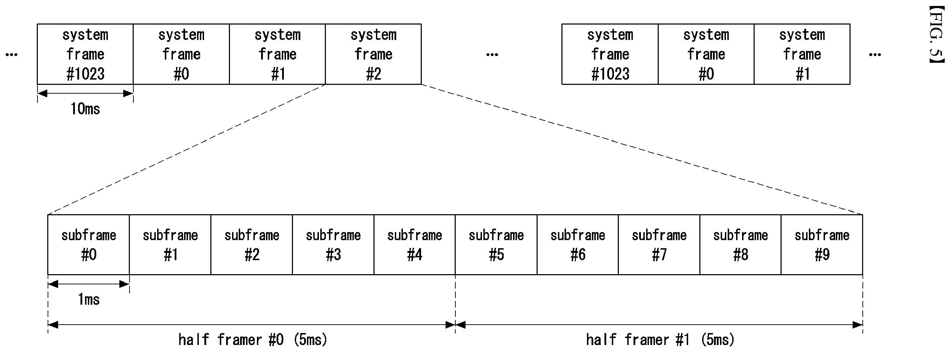

FIG. 5 is a conceptual diagram illustrating a first exemplary embodiment of a system frame in a communication system.

As shown in FIG. 5, time resources in the communication system may be divided on a frame basis. For example, system frames of the communication system may be configured continuously in the time domain. The length of the system frame may be 10 millisecond (ms). A system frame number (SFN) may be set to one of #0 to #1023. In this case, 1024 system frames may be repeated on the time domain of the communication system. For example, an SFN of a system frame after the system frame #1023 may be #0.

One system frame may include two half frames. The length of one half frame may be 5 ms. A half frame located at a starting region of the system frame may be referred to as 'half frame #0', and a half frame located at an ending region of the system frame may be referred to as 'half frame #1'. One system frame may include 10 subframes. The length of one subframe may be 1 ms. 10 subframes within one system frame may be referred to as subframes #0-#9.

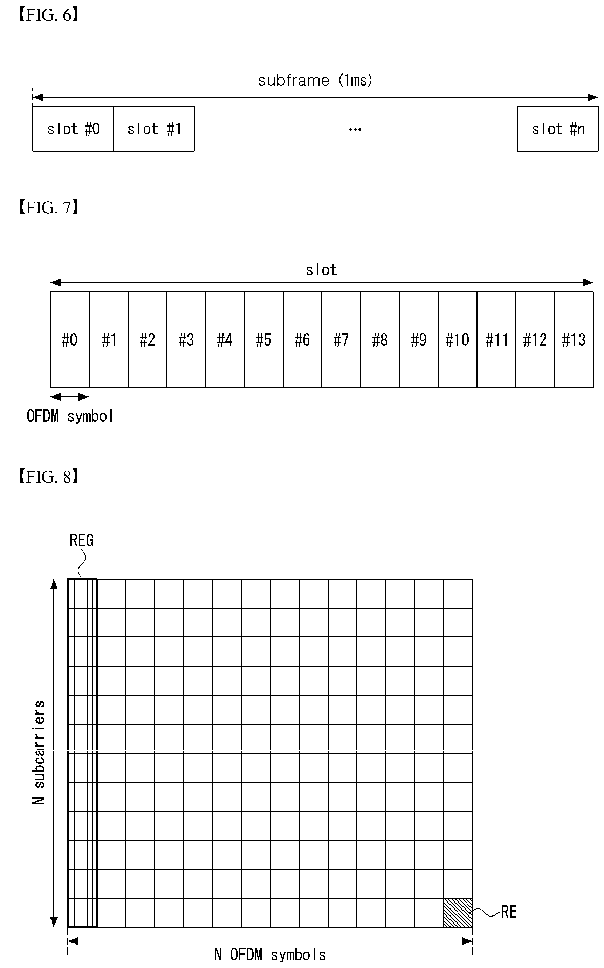

FIG. 6 is a conceptual diagram illustrating a first exemplary embodiment of a subframe in a communication system.

As shown in FIG. 6, one subframe may include n slots, and n may be a natural number. Accordingly, one subframe may consist of one or more slots.

FIG. 7 is a conceptual diagram illustrating a first exemplary embodiment of a slot in a communication system.

As shown in FIG. 7, one slot may include one or more symbols. For example, one slot shown in FIG. 7 may include 14 symbols. The length of slot may vary according to the number of symbols included in a slot and the length of symbol. Alternatively, the length of slot may vary according to a numerology.

The numerology applied to physical signals and channels in a communication system may be variable. The numerology may be adjusted to meet various technical requirements of the communication system. In a communication system where a cyclic prefix (CP)-based OFDM waveform technology is applied, the numerology may include a subcarrier spacing and a CP length (or CP type). Table 1 may illustrate a first exemplary embodiment of a method for configuring numerologies for a CP-OFDM-based communication system. Depending on a frequency band in which the communication system operates, at least some of the numerologies in Table 1 may be supported. Additionally, the communication system may support numerologies not listed in Table 1.

[Table 1]

| Subcarrier spacing | 15 kHz | 30 kHz | 60 kHz | 120 kHz | 240 kHz | 480 kHz |
|---|---|---|---|---|---|---|
| OFDM symbol length [$\mu$s] | 66.7 | 33.3 | 16.7 | 8.3 | 4.2 | 2.1 |
| CP length [us] | 4.76 | 2.38 | 1.19 | 0.60 | 0.30 | 0.15 |
| Number of OFDM symbols within 1ms | 14 | 28 | 56 | 112 | 224 | 448 |

When a subcarrier spacing is 15 kHz (e.g. $\mu = 0$), the length of slot may be 1 ms. In this case, one system frame may include 10 slots. When a subcarrier spacing is 30 kHz (e.g. $\mu = 1$), the length of slot may be 0.5 ms. In this case, one system frame may include 20 slots.

When a subcarrier spacing is 60 kHz (e.g. $\mu = 2$), the length of slot may be 0.25 ms. In this case, one system frame may include 40 slots. When a subcarrier spacing is 120 kHz (e.g. $\mu = 3$), the length of slot may be 0.125 ms. In this case, one system frame may include 80 slots. When a subcarrier spacing is 240 kHz (e.g. $\mu = 4$), the length of slot may be 0.0625 ms. In this case, one system frame may include 160 slots.

The symbol may be configured as a downlink (DL) symbol, flexible (FL) symbol, or uplink (UL) symbol. A slot composed of only DL symbols may be referred to as a 'DL slot', a slot composed of only FL symbols may be referred to as a 'FL slot', and a slot composed of only UL symbols may be referred to as a 'UL slot'.

A slot format may be semi-statically configured through higher-layer signaling (e.g. RRC signaling). Information indicating a semi-static slot format may be included in system information, and the semi-static slot format may be configured cell-specifically. Additionally, a semi-static slot format may be further configured for each terminal through terminal-specific higher-layer signaling (e.g. RRC signaling). Flexible symbols in the cell-specific slot format may be overridden to be downlink symbols or uplink symbols through terminal-specific higher-layer signaling. Furthermore, a slot format may be dynamically indicated through physical layer signaling (e.g. slot format indicator (SFI) included in DCI). The semi-statically configured slot format may be overridden by the dynamically indicated slot format. For example, flexible symbols configured semi-statically may be overridden to be downlink symbols or uplink symbols by the SFI.

Reference signals may include Channel State Information-Reference Signal (CSI-RS), Sounding Reference Signal (SRS), Demodulation-Reference Signal (DM-RS), and Phase Tracking-Reference Signal (PT-RS). Channels may include Physical Broadcast Channel (PBCH), Physical Downlink Control Channel (PDCCH), Physical Downlink Shared Channel (PDSCH), Physical Uplink Control Channel (PUCCH), PUSCH (Physical Uplink Shared Channel), PSCCH (Physical Sidelink Control Channel), and PSSCH (Physical Sidelink Shared Channel). In the present disclosure, a control channel may refer to PDCCH, PUCCH, or PSCCH, and a data channel may refer to PDSCH, PUSCH, or PSSCH.

FIG. 8 is a conceptual diagram illustrating a first exemplary embodiment of a time-frequency resource in a communication system.

As shown FIG. 8, a resource composed of one OFDM symbol on the time axis and one subcarrier on the frequency axis may be defined as a 'resource element (RE)'. A resource composed of one OFDM symbol on the time axis and K subcarriers on the frequency axis may be defined as a 'resource element group (REG)'. The REG may include K REs. The REG may be used as a basic unit of resource allocation in the frequency domain. K may be a natural number. For example, K may be 12. N may be a natural number. In the slot shown in FIG.7, N may be 14. N OFDM symbols may be used as a basic unit of resource allocation in the time domain.

In the present disclosure, an RB may refer to a common RB (CRB). Alternatively, an RB may refer to a physical RB (PRB) or a virtual RB (VRB). In a communication system, a CRB may refer to an RB that constitutes a set of contiguous RBs (e.g. a common RB grid) based on a reference frequency (e.g. point A). A carrier and/or bandwidth part may be mapped onto the common RB grid. That is, a carrier and/or bandwidth part may be configured with CRB(s). The RBs or CRBs that constitute a bandwidth part may be referred to as PRBs, and a CRB index may be appropriately converted to a PRB index within the bandwidth part.

Downlink data may be transmitted through a PDSCH. A base station may transmit configuration information (e.g. scheduling information) of the PDSCH to a terminal through a PDCCH. The terminal may obtain the configuration information of the PDSCH by receiving the PDCCH (e.g. Downlink Control Information (DCI)). For example, the configuration information of the PDSCH may include a Modulation Coding Scheme (MCS) used for transmission/reception of the PDSCH, time resource information of the PDSCH, frequency resource information of the PDSCH, and feedback resource information for the PDSCH.

The PDSCH may refer to a radio resource where the downlink data is transmitted and received. Alternatively, the PDSCH may refer to the downlink data itself. The PDCCH may refer to a radio resource where the downlink control information (e.g. DCI) is transmitted and received. Alternatively, the PDCCH may refer to the downlink control information itself.

The terminal may perform a monitoring operation for the PDCCH to receive the PDSCH transmitted from the base station. The base station may notify the terminal of configuration information for the PDCCH monitoring operation using a higher-layer message (e.g. Radio Resource Control (RRC) message). The configuration information for the PDCCH monitoring operation may include Control Resource Set (CORESET) information and search space information.

The CORESET information may include PDCCH DMRS information, PDCCH precoding information, and PDCCH occasion information, and the like. A PDCCH DMRS may be a DMRS used for demodulating a PDCCH. A PDCCH occasion refers to a region where a PDCCH may potentially exist, meaning it is a region where DCI can be transmitted. A PDCCH occasion may also be referred to as a PDCCH candidate. The PDCCH occasion information may include time resource information and frequency resource information for the PDCCH occasion. In the time domain, the length of the PDCCH occasion may be indicated in symbol units. In the frequency domain, the size of the PDCCH occasion can be indicated in RB units (e.g. in PRB units or CRB units).

The search space information may include a CORESET identifier (ID) associated with a search space, a periodicity of PDCCH monitoring, and/or an offset of PDCCH monitoring. The periodicity and offset of PDCCH monitoring may each be indicated in slot units. Additionally, the search space information may further include an index of a symbol where the PDCCH monitoring operation starts.

The base station may configure Bandwidth Part(s) (BWP(s)) for downlink communication. The BWP(s) may be configured differently for each terminal. The base station may notify the terminal of BWP configuration information using higher-layer signaling. The higher-layer signaling may refer to a transmission operation of system information and/or a transmission operation of RRC message(s). The number of BWPs configured for a single terminal may be one or more.

The terminal may receive the BWP configuration information from the base station and identify the configured BWP(s) based on the received configuration information. When multiple BWPs are configured for downlink communication, the base station may activate one or more BWPs from among the multiple BWPs. The base station may transmit configuration information of the activated BWP(s) to the terminal using at least one of higher-layer signaling, Medium Access Control (MAC) Control Element (CE), or DCI. The base station may perform downlink communication using the activated BWP(s). The terminal may identify the activated BWP(s) by receiving the configuration information from the base station and perform downlink reception operations on the activated BWP(s).

Meanwhile, the TR 38.912 of 3GPP specifications specifies multi-antenna schemes in the 5G NR. For example, it defines beam determination, beam measurement, beam reporting, and beam sweeping processes, which are related to downlink (DL) and uplink (UL), as a set of L1/L2 procedures for beam management. The beam management procedure is described as being supported by one or more TRxPs.

On the other hand, as previously described, the 5G NR beam management procedure consists of an initial beam establishment process, a beam adjustment process, a beam recovery process. According to the current standards, during the initial beam establishment and beam adjustment processes, beam sweeping is used to sequentially change beams one by one, measure performances of the respective beams, and compare the measured performances to identify the optimal transmission or reception beam. However, in 6G terahertz communications, which require highly directional beams due to a high path loss, a greater number of beams need to be formed compared to the 5G NR. As a result, the existing beam management scheme based on beam sweeping is expected to require significant time overhead. Additionally, in high-frequency band communications, such as terahertz frequencies anticipated for 6G, a channel coherence time is expected to be shorter. This makes it increasingly difficult to measure signal qualities for all candidate beams between a base station and a terminal using the existing scheme. In the following description, signal quality will be described as a reference signal received power (RSRP). However, other information, such as channel state information (CSI) or channel quality information (CQI), which are indicators of channel quality, may also be used.

The present disclosure proposes beam management procedures for environments utilizing high-frequency bands, such as the terahertz band, in future 6G communication systems. In particular, the present disclosure proposes beam management procedures leveraging a beam squint phenomenon observed in the terahertz band.

The beam squint phenomenon refers to a spatial direction difference observed for each subcarrier, which becomes more pronounced due to the high frequency and wide bandwidth of the terahertz band when beams are formed based on the center frequency using the conventional method.

The farther a subcarrier is from the center frequency, the more its signal direction deviates from that of the center frequency. Consequently, when such a beam squint is not compensated, even if beamforming is performed to transmit beams in a single direction, the beams are formed in multiple directions depending on the frequency band, making it difficult to achieve a desired reception signal strength.

One scheme, which is derived from various studies for compensating the beam squint phenomenon, involves using a Time Delay Network (TDN) to apply different phase shifts to the respective subcarriers, ultimately aligning the beams for all subcarriers in the same direction.

However, the present disclosure proposes a scheme that does not fully compensate for the beam squint phenomenon and dynamically controls the TDN function to form multiple beams in desired directions simultaneously based on numerous subcarriers. The base station and terminal employing methods proposed in the present disclosure can reduce the number of beam sweeps by forming beams in multiple directions simultaneously without sequentially conducting beam sweeping for all candidate beams. Additionally, the method according to the present disclosure can address the significant time overhead issue that arises when applying the sequential beam search approach based on beam sweeping to terahertz communications.

In the present disclosure described below, specific procedures required for performing beam management utilizing the beam squint phenomenon are provided. Additionally, parameters required therefor are also specified. As previously described, the 5G NR beam management procedure consists of the initial beam establishment, beam adjustment, and beam recovery processes. The present disclosure to be described below can be applied to all these processes. Specifically, the present disclosure considers a scenario where the initial beam establishment process has been performed in advance, followed by the beam adjustment and beam recovery processes. Furthermore, the present disclosure can be equally applied to the initial beam establishment process. Accordingly, the present disclosure assumes a situation where the base station and terminal have selected wide beam(s) for transmission and reception, and will describe a beam adjustment process for selecting an optimal beam among the wide beam(s) selected during the initial beam establishment process, and a beam recovery process for selecting a new beam when a beam misalignment occurs.

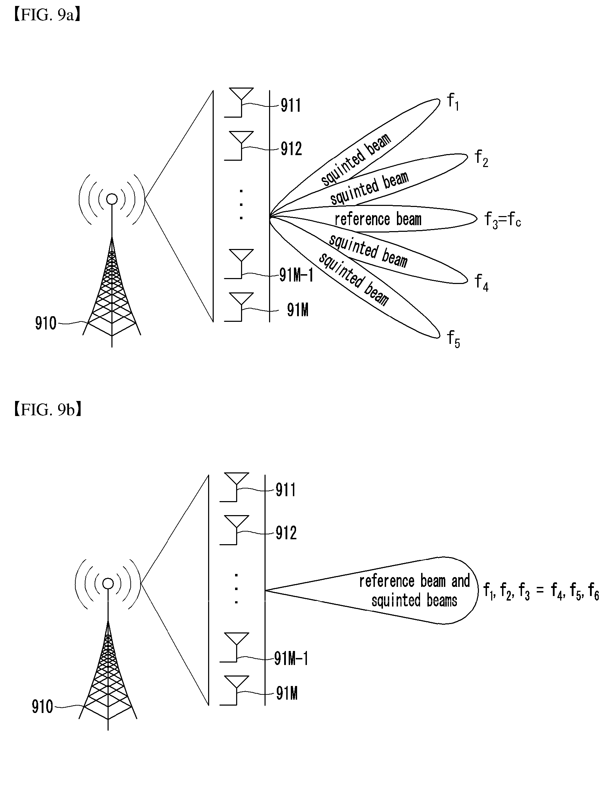

FIG. 9A is a conceptual diagram illustrating a beam squint phenomenon when a base station transmits beams using multiple antennas.

As shown in FIG. 9A, a base station 910 may transmit signals in a specific frequency band $f_c$ through multiple antennas 911, 912, ..., 91M-1, and 91M. For convenience of description, FIG. 9A illustrates a case where the multiple antennas 911, 912, ..., 91M-1, and 91M are included in a single panel of a uniform linear array (ULA). As previously described, wireless communication systems are expected to utilize a significantly larger number of antennas when employing a wider frequency band, such as unlicensed millimeter-wave bands or terahertz frequency bands, compared to the conventional systems. As the number of antennas increases, a distance between antennas within an antenna structure becomes larger, resulting in greater differences in propagation delay between the antennas.

In general, a time delay may result in a linear phase shift with respect to a frequency. Beamforming may form a beam in a specific direction, a desired beam direction, by applying specific phase shifts. These phase shifts may vary as a function of frequency. To elaborate, phase shifts for a desired beam direction may be expressed as a function of frequency.

As the allocated frequency band widens in the wireless communication system, a difference between a frequency allocated to each subcarrier and a center frequency increases. Particularly in terahertz bands, where communication is performed based on numerous subcarriers, beams transmitted at frequencies other than the center frequency $f_c$ may be transmitted as being spread in unintended directions. This phenomenon is defined as the beam squint phenomenon, as described above.

Accordingly, as shown in FIG. 9A, a reference beam at a frequency $f_3$ (i.e. $f_c$) in a desired direction, and squinted beams at frequencies $f_1$, $f_2$, $f_4$, and $f_5$ based on propagation delays may be formed. As a result, a beam squint may occur in the spatial directions of subcarriers within the same frequency band, as illustrated in FIG. 9A.

To fully deliver intended information from the base station to the terminal and achieve a desired reception signal strength, it is required to align the directions of the squinted beams with that of the center frequency $f_c$. Referring to FIG. 9A, a process of aligning the squinted beams at $f_1$, $f_2$, $f_4$, and $f_5$ with the desired beam at $f_3=f_c$. Hereafter, the desired beam will be referred to as the reference beam.

In case of a hybrid beamforming architecture used in 5G NR, it is impossible to address the beam squint phenomenon using the conventional hybrid beamforming structure because analog phase shifters cannot produce a different phase change for each frequency.

To resolve the beam squint phenomenon, a TDN function has been proposed. The TDN function refers to a structure composed of multiple True Time Delay (TTD) elements located between a digital precoder and analog phase shifters. Each TTD element constituting the TDN function has a specific delay value, and the TDN function, composed of these TTD elements, may generate a different phase change for each frequency.

Assuming a scenario where the base station transmits signals based on a hardware structure that includes the digital precoder, analog phase shifters, and TDN function positioned between them, a transmission signal passing through a wireless channel at the m-th subcarrier may be expressed as shown in Equation 1 below.

[Equation 1]

$$\mathbf{y}_m = \mathbf{H}_m^H \mathbf{A} \mathbf{A}_m^{TD} \mathbf{D}_m \mathbf{s}_m + \mathbf{n}_m$$

In Equation 1, $\mathbf{H}_m$ represents a channel matrix, $\mathbf{A}$ represents a phase change caused by the analog phase shifter, $\mathbf{A}_m^{TD}$ represents a phase change caused by the TDN function, $\mathbf{D}_m$ represents the digital precoder matrix, $\mathbf{s}_m$ represents information to be transmitted, and $\mathbf{n}_m$ represents noise.

In this case, when expressed for the time delay value of each TTD element, $\mathbf{A}_m^{TD}$ may be expressed as shown in Equation 2 below.

[Equation 2]

$$\mathbf{A}_m^{TTD} = \text{blkdiag}\left(\left[e^{-j2\pi f_m \mathbf{t}_1}, e^{-j2\pi f_m \mathbf{t}_2}, \dots, e^{-j2\pi f_m \mathbf{t}_{N_{RF}}}\right]\right)$$

In Equation 2, " blkdiag" refers to a block diagonal matrix where diagonal elements are values inside the parentheses.

Comparing the phase changes caused by the analog phase shifters and the TDN function based on Equation 2, the phase changes caused by the analog phase shifters in Equation 1 are independent of the subcarrier indexes because they induces frequency-independent phase changes, and thus they are expressed as $\mathbf{A}$.

In contrast, the phase change matrix $\mathbf{A}_m^{TTD}$ of the TDN function shows that its main diagonal components vary depending on both the time delay values $\mathbf{t}_1$, ..., $\mathbf{t}_{N_{RF}}$ of the respective TTD elements and the frequency $f_m$ of the m-th subcarrier. Therefore, it is evident that the TDN function generates frequency-dependent phase changes. By leveraging this characteristics of the TDN function, its ability to induce frequency-dependent phase changes, it is possible to compensate for the beam squint phenomenon that occurs in the terahertz band.

In previous studies, the beam squint phenomenon has primarily been compensated by configuring the TDN function so that the squinted beams are aligned with the reference beam's direction, as shown in FIG. 9B.

FIG. 9B is a conceptual diagram illustrating a case where squinted beams are aligned with a reference beam's direction when transmitting the beams using multiple antennas at a base station.

As shown in FIG. 9B, the base station 910 transmits signals in a specific frequency band $f_c$ through multiple antennas 911, 912, ..., 91M-1, and 91M. Similarly to FIG. 9A, these multiple antennas are included in a single panel of a ULA.

Comparing FIG. 9A and FIG. 9B, FIG. 9B illustrates a case where beams are squinted in the same direction as the reference beam at the frequencies $f_1$, $f_2$, $f_3$, $f_4$, $f_5$, and $f_6$ of all subcarriers. In contrast, in FIG. 9A, beams at the frequencies $f_1$, $f_2$, $f_3$, $f_4$, $f_5$, and $f_6$ of all subcarriers are squinted in different directions based on a frequency of each subcarrier relative to the reference beam at $f_c=f_3$.

The previous studies have primarily focused on methods, such as those illustrated in FIG. 9B, where the TDN function is configured to align the squinted beams with the reference beam's direction, thereby compensating for the beam squint phenomenon.

The present disclosure proposes methods for dynamically controlling the TDN function to form multiple beams simultaneously in desired directions.

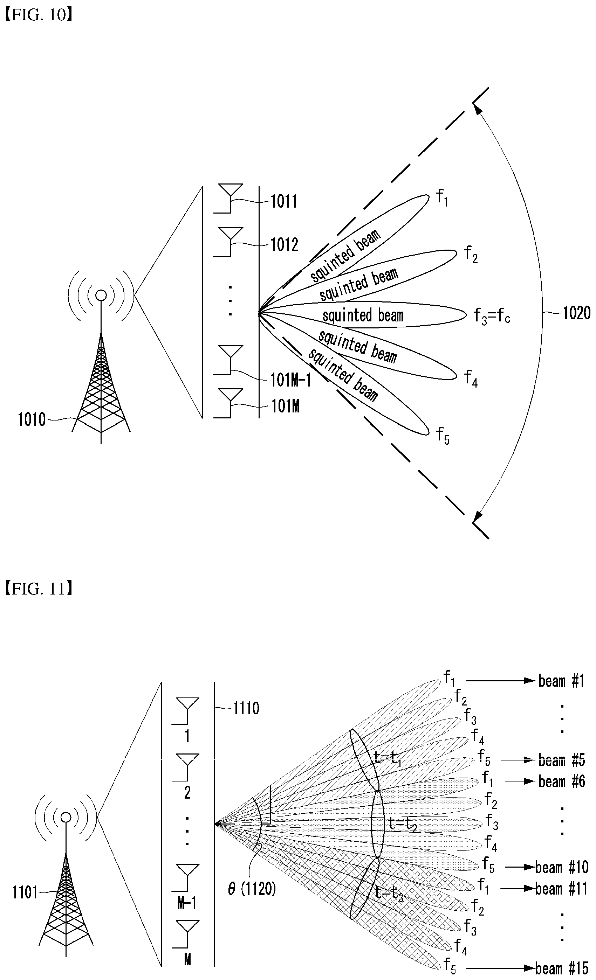

FIG. 10 is a conceptual diagram illustrating a case where a TDN function is dynamically controlled to form multiple beams simultaneously in desired directions when transmitting the beams using multiple antennas at a base station.

As shown in FIG. 10, a base station 1010 and multiple antennas 1011, 1012, ..., 101M-1, and 101M, which are included in a single panel of a ULA, are illustrated. Comparing FIG. 10 and FIG. 9A, a difference lies in the fact that all beams in FIG. 10 are squinted beams at $f_1$, $f_2$, $f_3$, $f_4$, and $f_5$.

In the present disclosure, the base station 1010 does not completely compensate for the beam squint phenomenon. Instead, it dynamically controls the TDN function to form beams such that those generated across multiple subcarriers simultaneously point in different directions. According to the example in FIG. 10, the base station 1010 may configure a range for beam sweeping, referred to as an angular search space 1020. Based on predefined conditions, it may transmit multiple beams simultaneously in different directions within the angular search space 1020 using multiple subcarriers.

In the following description, the present disclosure will describe a procedure for configuring a reference signal as a channel state information-reference signal (CSI-RS) to utilize the beam squint phenomenon for the beam adjustment and beam recovery processes, and for determining optimal transmission and reception beams. Although other types of signals besides CSI-RS may be used as the reference signal, the present disclosure will describe a case of using CSI-RS for convenience of description. Additionally, parameters used in the procedure will be described. The following description primarily assumes a downlink environment but can be extended to an uplink environment, which would be apparent to those skilled in the art.

Additionally, the present disclosure considers a scenario where the initial beam establishment process has already been performed. However, the proposed method in the present disclosure can be extended to enable a low-latency initial beam establishment process by simultaneously forming multiple beams during a process in which the base station and terminal select a wide beam using a combination of an SSB time index and a RACH occasion.

[Low-latency beam adjustment using beam squint]

In the present disclosure, during the initial beam establishment process, the base station and terminal determine an approximate beam direction using a combination of an SSB time index and a RACH occasion. Based on the beam direction determined between the base station and terminal, the beam adjustment process may be performed to select an optimal beam through a more refined beamforming procedure.

The beam adjustment process in the present disclosure may be divided into two stages.

In the first stage, the terminal uses a fixed beam. The terminal evaluates a performance of each candidate beam belonging to the base station's candidate beam group using the fixed beam. Based on the performance evaluation, the terminal may select the optimal beam, which may be one of the base station's transmission beams.

In the second stage, a beam of the base station may be fixed. The terminal may evaluate a performance of each candidate beam belonging to its own candidate beam group with respect to the fixed beam of the base station. Based on the performance evaluation, the terminal may select the optimal beam, which may be one of the terminal's reception beams.

The first stage will be described in further detail.

The first stage may be performed during the initial beam establishment process. In the initial beam establishment process, the terminal may fix its reception beam as a wide beam. In the first stage, the base station may transmit a reference signal (e.g. CSI-RS) through candidate beams. The terminal may measure the reference signal transmitted through the respective candidate beams and report measurement results to the base station. Consequently, the base station may select the optimal transmission beam based on the measurement results reported by the terminal.

In the second stage, the base station's transmission beam may be fixed to the beam selected in the first stage. The terminal may measure a reference signal (e.g. CSI-RS) transmitted through the optimal transmission beam of the base station using multiple reception beams. Based on the measurement results, the terminal may select the optimal reception beam.

In the first stage, where the base station forms transmission beams, and in the second stage, where the terminal forms reception beams, the conventional method defined in the 5G NR standard involves sequentially changing the beams one by one, that is, performing beam sweeping for measurements. In contrast, the present disclosure utilizes the beam squint phenomenon to form multiple beams in different directions simultaneously. In other words, by leveraging the beam squint phenomenon, different subcarriers may experience beam squint in varying directions, enabling them to form multiple beams instead of a single beam. Consequently, the base station and terminal can simultaneously measure the performances of beams formed in multiple directions using the beam squint phenomenon, significantly reducing time overhead.

FIG. 11 is a conceptual diagram illustrating a case where a base station allocates transmission beam resources using beam squint.

As shown in FIG. 11, a base station 1101 is illustrated as including multiple antennas within a single panel 1110 of a ULA. FIG. 11 differs from FIG. 10 in that the base station configures squinted beams at $f_1$, $f_2$, $f_3$, $f_4$, and $f_5$ for transmission in different directions over time $t_1$, $t_2$, and $t_3$. As described in FIG. 10, the base station 1101 according to the present disclosure does not completely compensate for the beam squint phenomenon. Instead, the base station 1101 may dynamically control the TDN function to form beams such that multiple subcarriers are squinted, enabling the beams to be formed simultaneously in multiple directions. In FIG. 11, a range for beam sweeping, referred to as an angular search space 1120 may be configured with a predefined angle $\theta$. The base station 1101 may simultaneously transmit multiple beams directed toward different directions through multiple subcarriers within the angular search space 1120. Here, a case where the base station 1101 cannot cover the entire angular search space 1120 in a single transmission of squinted beams may occur. In this case, the base station 1101 maty transmit the squinted beams multiple times to cover the entire angular search space 1120. For example, the base station 1101 may transmit squinted beams at $f_1$, $f_2$, $f_3$, $f_4$, and $f_5$ at the time $t_1$, transmit squinted beams at $f_1$, $f_2$, $f_3$, $f_4$, and $f_5$ at the time $t_2$, and then transmit squinted beams at $f_1$, $f_2$, $f_3$, $f_4$, and $f_5$ at the time $t_3$, thereby covering the entire angular search space 1120.

In FIG. 11, the predefined angle $\theta$ of the angular search space 1120 may correspond to a range within which beam sweeping is performed during the beam adjustment process. Beams from a beam at the topmost position ($f_1$ at $t_1$) to a beam at the bottommost position ($f_5$ at $t_3$) may correspond to the base station's candidate beams (i.e. BS beam #1 to BS beam #15). FIG. 11 illustrates a case where the candidate beams are transmitted in three divisions, with each transmission using different five frequencies to transmit the beams as squinted beams.

At the time $t_1$, the base station 1101 may dynamically control the TDN function to generate squinted beams using five frequency resources $f_1$ to $f_5$. In other words, as described in FIG. 9A, at the time $t_1$, the base station 1101 may control the TDN function such that other beams (e.g. beam #1 at $f_1$, beam #2 at $f_2$, beam #4 at $f_4$, and beam #5 at $f_5$) are dispersed outward from the central beam #3, formed using the third subcarrier $f_3$ corresponding to the center frequency $f_c$. The base station 1101 may control the TDN function in the same manner at the time $t_2$ and the time $t_3$.

In this case, as shown in FIG. 11, in order to transmit beams symmetrically around a specific beam, frequency resource intervals corresponding to the respective beams need to be consistent. In other words, assuming that frequencies increase from $f_1$ to $f_5$, in order to transmit beams as shown in FIG. 11, a frequency interval between $f_2$ and $f_1$, a frequency interval between $f_3$ and $f_2$, a frequency interval between $f_4$ and $f_3$, and a frequency interval between $f_5$ and $f_4$ need to be identical. Consequently, the frequency resources for CSI-RS transmission need to have equal intervals between adjacent frequencies.

If transmission frequency bands are configured differently, the frequency bands transmitted {$f_1$, ..., $f_5$} at the time $t_1$, the frequency bands {$f_6$, ..., $f_{10}$} transmitted at the time $t_2$, and the frequency bands {$f_{11}$, ..., $f_{15}$} transmitted at the time $t_3$ need to be configured such that beam angles of the candidate beams are equally spaced, as shown in FIG. 11. In this case, main lobes of the candidate beams need to be configured not to overlap with one another, and the TDN function needs to be configured such that all angles within the angular search space 1120 transmitted at a single time belong to a specific main lobe.

Meanwhile, the method shown in FIG. 11 will be compared with conventional methods.

From the perspective of time overhead, the beam management process in 5G NR and the method of FIG. 11 will be compared. In the 5G NR beam management process, the base station transmits beams one by one to assess the performance of each candidate beam, performing a total of 15 beam sweeps. In contrast, using the beam squint phenomenon according to the present disclosure as shown in FIG. 11, where beams are simultaneously transmitted in five different directions, the number of beam sweeps may be reduced to three. This process may thus be considered a low-latency beam adjustment method suitable for terahertz bands.

Tables 2 to 4 below illustrate a process in which the base station 1101, as shown in FIG. 11, allocates frequency and time resources for its candidate beams during the beam adjustment process and transmits allocation information to the terminal.

[Table 2]

| Candidate beams of base station CSI-RS resource allocation information | BS beam #1 | BS beam #2 | BS beam #3 | BS beam #4 | BS beam #5 |
|---|---|---|---|---|---|
| Frequency | $f_1$ | $f_2$ | $f_3$ | $f_4$ | $f_5$ |
| Time | $t_1$ | $t_1$ | $t_1$ | $t_1$ | $t_1$ |

[Table 3]

| Candidate beams of base station CSI-RS resource allocation information | BS beam #6 | BS beam #7 | BS beam #8 | BS beam #9 | BS beam #10 |
|---|---|---|---|---|---|
| Frequency | $f_1$ | $f_2$ | $f_3$ | $f_4$ | $f_5$ |
| Time | $t_2$ | $t_2$ | $t_2$ | $t_2$ | $t_2$ |

[Table 4]

| Candidate beams of base station CSI-RS resource allocation information | BS beam #11 | BS beam #12 | BS beam #13 | BS beam #14 | BS beam #15 |
|---|---|---|---|---|---|
| Frequency | $f_1$ | $f_2$ | $f_3$ | $f_4$ | $f_5$ |
| Time | $t_3$ | $t_3$ | $t_3$ | $t_3$ | $t_3$ |

Table 2 illustrates a case where beam indexes are assigned to squinted beams at frequencies $f_1$, $f_2$, $f_3$, $f_4$, and $f_5$ at the time $t_1$, Table 3 illustrates a similar case where beam indexes are assigned to squinted beams at frequencies $f_1$, $f_2$, $f_3$, $f_4$, and $f_5$ at the time $t_2$, and Table 4 illustrates a similar case where beam indexes are assigned to squinted beams at frequencies $f_1$, $f_2$, $f_3$, $f_4$, and $f_5$ at the time $t_3$.

Tables 2 to 4 may be tables corresponding to the example of using squinted beams within the angular search space 1120 during the initial beam establishment process, as shown in FIG. 11. The total beam transmitted at the time $t_1$ within the angular search space 1120 may be a wide beam, while each squinted beam may be a narrow beam. Similarly, the total beams transmitted at the times $t_2$ and $t_3$ within the angular search space 1120 may be wide beams, while each squinted beam may be a narrow beam. Tables 2 through 4 assume a scenario where the number of candidate beams using squinted beams, as shown in FIG. 11, is determined to be 15 in total. Therefore, FIG. 11 and Tables 2 to 4 show an example where the 15 candidate beams are transmitted in three groups each comprising 5 beams over a total of 3 transmissions.

FIG. 11 and Tables 2 to 4 are merely an example and the present disclosure is not limited thereto. In other words, if the base station 1101 has more frequency resources available for transmission to the terminal and can cover the entire angular search space 1120 in a single transmission according to beam squinting of the frequency resources, all 15 candidate beams may be transmitted in a single transmission. As another example, even when there are sufficient frequency resources, if the beam squinting of the frequency resources cannot cover the entire angular search space 1120, or if the frequency resources are fewer than those illustrated in FIG. 11, a greater number of transmissions may be required.

As shown in Tables 2 to 4, the base station 1101 may need to allocate frequency and time resources to the respective candidate beams to assess the performances of the candidate beams for beam adjustment.

Furthermore, the base station 1101 may need to allocate frequency and time resources for transmitting a total of 15 candidate beams and transmit information regarding the allocated frequency and time resources to the terminal. The frequency and time resources allocated by the base station 1101 may be informed through various types of messages or signals. For example, such messages or signals may utilize one of downlink control information (DCI), medium access control-control element (MAC-CE), radio resource control (RRC) reconfiguration, or newly defined RRC signaling according to the present disclosure.

The terminal may receive the information shown in Tables 2 to 4 from the base station 1101 and perform CSI-RS measurement result reporting based on the description below using the allocated frequency and time resources. However, the delivery of the information of Tables 2 to 4 may be flexibly performed as a preparatory process required for the base station 1101 to perform CSI-RS transmission to the terminal, depending on a situation and necessity, such as when requested by the terminal or for beam management by the base station.

Meanwhile, the terminal may receive the CSI-RS for the respective beams through beams mapped as shown in Table 5, based on the frequency and time resources informed by the base station 1101. In Tables 2 to 4, the respective beams are identified using indexes such as beam #1, beam #2, ..., and beam #15. However, in an actual wireless communication system, beam indexes may be represented in binary format. An example of such beam indexes is illustrated in Table 5 below.

[Table 5]

| Candidate beams of base station | Beam index | Candidate beams of base station | Beam index |
|---|---|---|---|
| BS beam #1 | 0000 | BS beam #9 | 1000 |
| BS beam #2 | 0001 | BS beam #10 | 1001 |
| BS beam #3 | 0010 | BS beam #11 | 1010 |
| BS beam #4 | 0011 | BS beam #12 | 1011 |
| BS beam #5 | 0100 | BS beam #13 | 1100 |
| BS beam #6 | 0101 | BS beam #14 | 1101 |
| BS beam #7 | 0110 | BS beam #15 | 1110 |
| BS beam #8 | 0111 | | |

During the beam adjustment process, the base station 1101 may map the beam indexes exemplified in Table 5 to the candidate beams and transmit the CSI-RS along with the beam indexes using the resources (time and frequency resources) exemplified in Tables 2 to 4.

When utilizing beam squint, the beam direction changes depending on the frequency band allocated to the beam. Therefore, the base station 1101 may need to deliver information on frequency and time resources allocated for implementing candidate beams to the terminal to ensure accurate performance measurement of the candidate beams. As shown in FIG. 11, to transmit candidate beams, the base station 1101 may need to inform the terminal in advance of the frequency and time resources allocated for CSI-RS for the respective beams, as described in Tables 2 to 4. Accordingly, the base station 1101 may share information on its candidate beams used in the beam adjustment process with the terminal by notifying the terminal in advance using messages or signals, as previously described, in a format such as that exemplified in Table 5.

Assuming that the total number of candidate beams of the base station 1101 utilized in the beam adjustment process is n, a bit length of the beam index may be determined using a ceiling function to distinguish each candidate beam. For example, the ceiling function as expressed in Equation 3 below may be used.

$$[\text{Equation 3}]$$

$$\mathrm{ceil}(\log_2 n)$$

Equation 3 determines the bit length of the beam index. When n is 1, 1 bit may be allocated. Based on the determined bit length, the beams may be identified in binary starting from the first beam.

When 15 beams are used based on Equation 3, 4 bits are required, and each beam may be assigned an index as exemplified in Table 5. Accordingly, the base station 1101 may transmit the CSI-RS along with the beam index when transmitting the CSI-RS. The terminal may then identify the beam transmitting the CSI-RS received from the base station 1101 using the beam index.

Furthermore, the terminal may measure the performance of the received CSI-RS and transmit the beam index together when reporting the measurement result to the base station 1101. Accordingly, when the base station 1101 receives an RSRP value of the CSI-RS, the base station 1101 may identify each beam through the beam index.

During the beam adjustment process by the base station 1101, the terminal may need to fix a reception beam to the beam selected during the initial beam establishment process. Therefore, the terminal may need to configure the TDN function to completely compensate for the beam squint phenomenon, as shown in FIG. 10B. The terminal may then need to form a beam in one direction through the configured TDN function to receive the CSI-RS.

Meanwhile, the beam indexes have been used to describe the mapping of frequency and time resources to beams, as exemplified in Table 5. However, since the frequency and time information are already determined, it is also possible to identify the beams without using the beam indexes, relying solely on the frequency and time information. Therefore, the beam indexes exemplified in Table 5 may not be used. In other words, it is also possible for only the base station 1101 to know the indexes in Table 5 or for only the base station 1101 to know the information in Tables 2 to 4. In such cases, the terminal may transmit an RS index to the base station 1101 when reporting the CSI-RS measurement result, as in the 5G NR system. In this case, the base station 1101 may utilize Table 5 in the process of recognizing the beam corresponding to the RS index. For convenience of description, the following description assumes use of the beam indexes in Table 5.

Through the above-described process, the terminal may receive the CSI-RS through the frequency and time resources informed by the base station 1101 for the respective beam indexes exemplified in Table 5. The terminal may measure the CSI-RS transmitted by the base station 1101 for multiple beams and report the RSRP values of the CSI-RS along with the beam indexes to the base station. An example of the RSRP values of the CSI-RS, which are reported by the terminal to the base station, may be exemplified as in Table 6 below.

[Table 6]

| Candidate beams of base station (beam index) | RSRP value | Candidate beams of base station (beam index) | RSRP value |
|---|---|---|---|
| BS beam #1 (0000) | RSRP_88 | BS beam #9 (1000) | RSRP_69 |
| BS beam #2 (0001) | RSRP_95 | BS beam #10 (1001) | RSRP_62 |
| BS beam #3 (0010) | RSRP_90 | BS beam #11 (1010) | RSRP_87 |
| BS beam #4 (0011) | RSRP_55 | BS beam #12 (1011) | RSRP_54 |
| BS beam #5 (0100) | RSRP_69 | BS beam #13 (1100) | RSRP_43 |
| BS beam #6 (0101) | RSRP_79 | BS beam #14 (1101) | RSRP_44 |
| BS beam #7 (0110) | RSRP_107 | BS beam #15 (1110) | RSRP_50 |
| BS beam #8 (0111) | RSRP_100 | | |

The terminal may measure the RSRP of the CSI-RS received from each of the candidate beams transmitted by the base station 1101 and transmit the results to the base station 1101, as exemplified in Table 6.

Table 6 provides an example where the base station 1101 has a total of 15 candidate beams. The terminal may measure the performances of the CSI-RS transmitted by the base station 1101 through the 15 candidate beams and report the measurement results to the base station 1101 along with the beam indexes. In Table 6, the beam index corresponds to the beam index of each candidate beam of the base station 1101 described in Table 5, and the RSRP value represents the RSRP for each candidate beam.

The terminal may report the RSRP value of the CSI-RS to the base station through a CSI reporting process, and transmit information on the beam index associated with the CSI-RS to the base station through uplink control information (UCI).

The reporting process of the RSRPs for the CSI-RS transmitted through the base station's candidate beams may involve the base station conveying information regarding performance reporting instruction for its candidate beams to the terminal through *UEInformationRequest* in RRC signaling. If the *UEInformationRequest* in the RRC signaling is configured with a performance reporting instruction for the candidate beams of the base station 1101, the terminal may transmit information on the RSRPs of the candidate beams of the base station 1101. In addition, the information regarding performance reporting instruction for the base station's candidate beams may also be transmitted through an SIB or newly defined RRC signaling designed to apply the present disclosure. The terminal may respond to the reporting instruction using a measurement report or UE assistance information. As another example, if a new RRC signaling is defined for reporting under the present disclosure, the newly defined RRC signaling may also be utilized.

Based on the description above, the base station 1101 may identify a beam index of a beam with the best performance among the multiple candidate beams based on the RSRP feedback from the terminal. Furthermore, the base station 1101 may determine a transmission beam using the beam index of the beam with the best performance obtained during the beam adjustment process.

As exemplified in Table 6, since the RSRP of the BS beam #7 corresponding to the beam index '0110' has the highest value, the base station 1101 may select the BS beam #7 as the optimal beam.

Through the procedure described above, in other words, through the beam adjustment process described with reference to Tables 2 to 6, the base station 1101 may select the optimal beam among its candidate beams belonging to its beam candidate group.

Hereinafter, a procedure will be described in which the terminal, in a situation where the base station 1101 has fixed its transmission beam to the BS beam #7, measures performances of candidate beams within its beam candidate group and identifies the optimal reception beam.

The terminal may have a beam candidate group as exemplified in Table 7 below.

[Table 7]

|  | Candidate beam group | Number of candidate beams |
|---|---|---|
| Terminal | UE beam #1, UE beam #2, UE beam #3, UE beam #4, UE beam #5, UE beam #6 | 6 |

As described above, after the beam adjustment process in the base station 1101, the terminal may need to configure its beam candidate group to perform the beam adjustment process. Accordingly, the terminal may need to inform the number of its candidate beams to the base station 1101.

In Table 7, each candidate beam belonging to the terminal's beam candidate group may have a narrower beamwidth compared to the reception beam selected during the initial beam establishment process. The candidate beams of the terminal shown in Table 7 may be interpreted as narrower beams into which the reception beam established through the initial beam establishment process is subdivided.

To evaluate the CSI-RS reception performance for its candidate beams during the beam adjustment process, the terminal may inform the number of its candidate beams to the base station 1101. For example, the terminal may use UCI, UE assistance information, or UE capability information to inform the number of its candidate beams to the base station. Alternatively, if a new RRC signaling according to the present disclosure is defined to transmit information on the number of candidate beams, the terminal may use the corresponding RRC signaling to transmit information on the number of its candidate beams to the base station 1101.

Upon receiving the information on the number of candidate beams from the terminal, the base station 1101 may allocate CSI-RS frequency and time resources corresponding to the number of the terminal's candidate beams, and transmit the CSI-RS to the terminal using the allocated resources.

When the base station 1101 transmits the CSI-RS during the beam adjustment process at the terminal, the base station 1101 may utilize 'ENUMERATED {on, off}' of a parameter 'repetition' within a NZP-CSI-ResourceSet IE of an RRC reconfiguration message, as defined in the 5G NR standard. In other words, by transmitting the number of repetitions of the configured beam using 'ENUMERATED {on, off}' in the NZP-CSI-ResourceSet IE of the RRC reconfiguration message to the terminal, the base station 1101 may inform the terminal that the transmission beam currently used by the base station 1101 is fixed. In this case, the base station 1101 may determine the number of repetitions based on the number of candidate beams informed from the terminal.

In Table 7, an example is provided where the terminal has a total of six candidate beams. Accordingly, the terminal's angular search space may consist of six narrow beams. In other words, during the terminal's reception beam adjustment process, six narrow beams may exist within a range where the terminal performs beam sweeping. Under the condition where the base station's transmission beam is fixed to the BS beam #7, the terminal may measure the performances of beams ranging from a UE beam #1 to UE beam #6 and select the optimal reception beam based on the results.

To perform reception beam adjustment at the terminal, the base station 1101 may need to allocate time and frequency resources for the terminal to measure the performances of its reception beams. An example of the base station 1101 allocating time and frequency resources for the terminal's reception beam adjustment is provided in Table 8.

[Table 8]

| CSI-RS resource allocation information / Candidate beams of terminal | UE beam #1 | UE beam #2 | UE beam #3 | UE beam #4 | UE beam #5 | UE beam #6 |
|---|---|---|---|---|---|---|
| Frequency | $f'_1$ | $f'_2$ | $f'_3$ | $f'_1$ | $f'_2$ | $f'_3$ |
| Time | $t_4$ | $t_4$ | $t_4$ | $t_5$ | $t_5$ | $t_5$ |

When the terminal has a total of six candidate beams as described with reference to Table 6, Table 8 provides an example of frequency resource information for allocating CSI-RS at the times $t_4$ and $t_5$ for measuring the performances of the terminal's reception beams.

At the time $t_4$, the base station 1101 may allocate frequencies $f'_1$, $f'_2$, and $f'_3$ to transmit the CSI-RS for the terminal's reception beam performance measurement. Similarly, at the time $t_5$, the base station may allocate frequencies $f'_1$, $f'_2$, and $f'_3$ to transmit the CSI-RS.

Using the UE beam #1, UE beam #2, and UE beam #3, the terminal may measure the CSI-RS transmitted at the time $t_4$ through the frequencies $f'_1$, $f'_2$, and $f'_3$. Similarly, using the UE beam #4, UE beam #5, and UE beam #6, the terminal may measure the CSI-RS transmitted at the time $t_5$ through frequencies $f'_1$, $f'_2$, and $f'_3$.

As shown in Table 8, during the terminal's reception beam performance measurement, the transmission beam of the base station 1101 may remain fixed as the BS beam #7. Therefore, the base station 1101 may control the TDN function to transmit the CSI-RS to the terminal using beams that completely compensate for the beam squint phenomenon, as shown in FIG. 9B.

On the other hand, the terminal may receive the CSI-RS through multiple reception beams at a specific time. In other words, the terminal may receive the beams transmitting the CSI-RS using multiple reception beams without configuring the TDN function to fully compensate for the beam squint phenomenon. Configuring the TDN function to fully compensate for the beam squint phenomenon may be performed using the method described in FIG. 11. For example, as in the transmission beam alignment process of the base station described in FIG. 11, the TDN function may be controlled to align the squinted beams toward directions near the reference beam, forming multiple reception beams simultaneously. In Table 8, the base station 1101 may transmit beams through three frequency resources $f'_1$ to $f'_3$ at the time $t_4$, i.e., three subcarriers. Therefore, according to Table 8, the terminal may utilize the beam squint phenomenon to simultaneously form three beams in different directions and receive the signals.

Table 8 provides an example where the base station 1101 transmits the CSI-RS in two rounds, three beams at a time, allowing the terminal to measure the performances of six reception beams in total. However, this is merely an example, and the present disclosure is not limited to the example of Table 8.

The above-described method will be described as compared to 5G NR.

From a time overhead perspective, in 5G NR beam management, the terminal needs to perform six rounds of beam sweeping to evaluate the performance of each candidate beam by receiving CSI-RS through one reception beam at a time. In contrast, based on the beam squint phenomenon in the present disclosure, the terminal may simultaneously form beams in different directions, reducing the number of beam sweeping rounds to two. Thus, this can enable a low-latency beam adjustment process suitable for wireless communication systems in the terahertz band.

Through the procedure described with reference to Table 8, the terminal may measure the performance of its candidate beams, as defined in Table 7, during the beam adjustment process.

In the procedure described with reference to Table 8, the terminal may measure the RSRP values for its candidate beams, as exemplified in Table 9.

[Table 9]

| Candidate beams of terminal | RSRP value |
|---|---|
| UE beam #1 | RSRP_77 |
| UE beam #2 | RSRP_50 |
| UE beam #3 | RSRP_65 |
| UE beam #4 | RSRP_98 |
| UE beam #5 | RSRP_106 |

(continued)

| Candidate beams of terminal | RSRP value |
|---|---|
| UE beam #6 | RSRP_84 |

Table 9 provides an example of the results where the terminal measures the RSRP of the CSI-RS transmitted by the base station 1101 using each of its candidate beams. As shown in Table 9, the terminal may receive the CSI-RS for each of its candidate beams and measure the RSRP of the CSI-RS. Based on the measured RSRP values, the terminal may select the optimal reception beam.

Table 9 provides an example where the terminal measures the performances of its reception beams for the CSI-RS transmitted by the base station 1101, given that the terminal has a total of six candidate beams. In Table 9, the terminal's candidate beam refers to each candidate beam within the beam candidate group defined in Table 7, and the RSRP value represents the measured RSRP of the CSI-RS transmitted by the base station 1101 using each candidate beam.

The base station 1101 may receive information on the number of the terminal's reception beams and transmit the CSI-RS one or more times to ensure that the terminal can receive the CSI-RS through its reception beams.

After receiving the CSI-RS through its candidate beams, the terminal may measure the RSRP of the CSI-RS transmitted by the base station 1101 for each candidate beam and determine the optimal reception beam based on the measurement results.

According to the example in Table 9, since the RSRP for the UE beam #5 is the highest, the terminal may select the UE beam #5 as the optimal reception beam during the beam adjustment process.

When collectively describing the operations described in Tables 7 to 9, the operations may be understood as a procedure for the terminal to select the optimal beam among the candidate beams within its beam candidate group during the beam adjustment process. In other words, the terminal may measure the performances of the candidate beams for receiving the fixed beam transmitted by the base station 1101 using the CSI-RS and determine the optimal reception beam based on the measured performances.

The above description has covered the low-latency beam adjustment method utilizing beam squint. In other words, the operations described with reference to Tables 2 to 9 may correspond to a procedure where the base station 1101 and the terminal select a narrower beam after the initial beam establishment. Specifically, Tables 2 to 6 pertain to the procedure for the base station selecting the optimal transmission beam through beam sweeping, while Tables 7 to 9 pertain to the procedure for the terminal selecting the optimal reception beam through beam sweeping.

Furthermore, according to the present disclosure, by appropriately controlling the TDN function in high-frequency bands where the beam squint phenomenon occurs, it is possible to simultaneously form multiple beams in desired directions. Additionally, the performances of multiple beams can be measured simultaneously. Therefore, during beam adjustment, the method according to the present disclosure may be considered distinct from the sequential beam search scheme used in 5G NR.

[Low-latency beam recovery utilizing beam squint]

The beam adjustment procedure for identifying the optimal beam from transmission beams or reception beams formed based on the beam squint phenomenon has been described with reference to FIG. 11 and Tables 2 to 9. Through the aforementioned process, it is possible to find the optimal beam without performing the beam sweeping procedure individually for the respective candidate beams. This enables satisfaction of the high-level low-latency communication requirements demanded by 6G communication systems.

Hereinafter, a beam recovery process will be described considering the latency requirements of the terminal in cases where a channel state between the base station and the terminal changes, making it difficult to continue using the previously identified optimal beam obtained through the earlier procedure.

If a beam failure occurs in a communication link between the base station and the terminal, the terminal may transmit beam failure recovery request information to the base station. Upon receiving the beam failure recovery request information, the base station may determine the number of beam sweeps to be performed during the beam recovery process based on the terminal's latency requirements. In this case, the latency requirements may be determined based on data being serviced to the terminal. As another example, the latency requirements may be included in the beam failure recovery request information, received from the terminal in advance, or preconfigured based on the terminal's grade. Additionally, the number of beam sweeps may be determined based on the beam directions to which CSI-RS is transmitted within the angular search space.

A beam failure situation refers to when beam failure instances (BFIs) for the communication link established between the terminal and the base station exceed the maximum allowable count. When a beam failure occurs, a beam recovery process needs to be performed. The terminal and/or the base station may be equipped with a beam failure instance counter (BFI_COUNTER) to detect a beam failure. The BFI_COUNTER declares a beam failure when the number of the beam failure instances exceeds or equals a predefined maximum count value (i.e. BFI_COUNTER $\geq$ BeamFailureInstanceMaxCount). Here, a BFI refers to a case where a block error rate (BLER) exceeds a certain threshold. Each time a BFI occurs, the value of the BFI_COUNTER increases by one. If the BFI_COUNTER does not increase during a predefined time after incrementing by one, the BFI_COUNTER may be reset to zero, and it is interpreted that no further BFIs have occurred.

The beam failure recovery request information may be transmitted from the terminal to the base station through *BeamFailureRecoveryConfig,* which includes information such as *rach-ConfigBFR, rsrp-ThresholdSSB,* and *candidatebeamRSList* of RRC signaling. Upon receiving the beam failure recovery request information, the base station may determine the number of beam sweeps to be performed during the beam recovery process based on a waiting time requirement value requested by the terminal.

Table 10 exemplifies determination of the number of beam sweeps and beam directions within the angular search space based on the terminal's waiting time requirement value during beam recovery.

[Table 10]

| Terminal's latency requirement | Possible number of beam sweeps | Beam directions within angular search space ($[\theta_1 \; \theta_2]$) |
|---|---|---|
| $LR_{UE} < 2T$ | 1 | $\{\theta_1 + \frac{\theta_2 - \theta_1}{10}, \theta_1 + \frac{3(\theta_2 - \theta_1)}{10}, ..., \theta_1 + \frac{9(\theta_2 - \theta_1)}{10}\}$ |
| $2T \leq LR_{UE} < 3T$ | 2 | $\{\theta_1 + \frac{\theta_2 - \theta_1}{20}, \theta_1 + \frac{3(\theta_2 - \theta_1)}{20}, ..., \theta_1 + \frac{19(\theta_2 - \theta_1)}{20}\}$ |
| $3T \leq LR_{UE} < 4T$ | 3 | $\{\theta_1 + \frac{\theta_2 - \theta_1}{30}, \theta_1 + \frac{3(\theta_2 - \theta_1)}{30}, ..., \theta_1 + \frac{29(\theta_2 - \theta_1)}{30}\}$ |

In Table 10, assuming that $LR_{UE}$ is the terminal's waiting time requirement value and T is a time required to perform a single beam sweeping process, an example is presented where the number of beam sweeps that can be performed within a time corresponding to $LR_{UE}$ is determined.

As shown in Table 10, when the terminal's waiting time requirement value is greater, more time resources may be allocated to the beam recovery process. Consequently, the base station may perform more beam sweeps. Performing more beam sweeps increases the number of measurable angles within the angular search space.

A case will be described where up to five frequency resources are assumed to be available for the simultaneous CSI-RS transmission during the beam adjustment process in the environment described in FIG. 11.

For example, when considering a case where the terminal's waiting time requirement $LR_{UE}$ is less than the time 2T required to perform two beam sweeping processes, since the base station can only perform one beam sweep, if the entire angular search space ranges from $\theta_1$ to $\theta_2$, the entire angular space needs to be covered using five frequency resources. Accordingly, the entire angular search space 1120 needs to be divided into five sections as shown in Equation 4 below.

[Equation 4]

$$\left\{\theta_1, \theta_1 + \frac{2(\theta_2 - \theta_1)}{10}\right\}, \left\{\theta_1 + \frac{2(\theta_2 - \theta_1)}{10}, \theta_1 + \frac{4(\theta_2 - \theta_1)}{10}\right\}, \left\{\theta_1 + \frac{4(\theta_2 - \theta_1)}{10}, \theta_1\right.$$

$$\left. + \frac{6(\theta_2 - \theta_1)}{10}\right\}, \left\{\theta_1 + \frac{6(\theta_2 - \theta_1)}{10}, \theta_1 + \frac{8(\theta_2 - \theta_1)}{10}\right\}, \left\{\theta_1 + \frac{8(\theta_2 - \theta_1)}{10}, \theta_2\right\}$$

The entire angular search space may be divided into five angular sections, as shown in Equation 4, and beams may be configured to be transmitted at a midpoint of each divided angular section. This may correspond to the first case in Table 10 ($LR_{UE} < 2T$).

As another example, when the terminal's waiting time requirement satisfies $3T \leq LR_{UE} < 4T$, the number of possible beam sweeps may be three. Accordingly, as in the last case of Table 10, the beam directions may be measured over three sweeps.

Subsequently, the base station may proceed with the beam recovery process for the beam directions within the angular search space 1120 determined based on the terminal's waiting time requirement, as shown in Table 10. During the beam recovery process, the base station 1101 may transmit the CSI-RS using each candidate beam group directed toward the corresponding angles. The terminal may then measure RSRPs of the CSI-RS received through the candidate beams. The terminal may feedback the measured RSRPs to the base station. Based on the RSRPs fed back by the terminal, the base station 1101 may reselect a transmission beam.

As described above with reference to Table 10, the base station 1101 may determine the number of possible transmission beam sweeps based on the terminal's waiting time requirement. The base station 1101 may then determine the beam directions within the angular search space 1120 of the transmission beams based on the determination.

The base station may determine the number of beam sweeps based on the method defined in the 5G NR standard. The number of beam sweeps may be configured differently depending on the terminal's waiting time requirement. Once the number of beam sweeps is determined, the angular search space may be configured, and beams may be transmitted according to the determined number of beam sweeps, as exemplified in Table 10.

The beam recovery procedure described above pertains to the transmission beam recovery procedure. However, the present disclosure may also be extended to apply to the reception beam recovery procedure as well.

As described with reference to Table 10, the base station 1101 may determine a candidate beam group to be used for beam recovery based on the terminal's waiting time requirement. Once the base station 1101 determines the candidate beam group to be used, the base station 1101 may need to allocate frequency and time resources for CSI-RS transmission. Table 11 exemplifies a case where the base station 1101 allocates frequency and time resources for CSI-RS transmission.

[Table 11]

| Beam recovery candidate beams of base station | Beam index | CSI-RS resource allocation information | |
|---|---|---|---|
| | | Frequency | Time |
| **BS** recovery beam #1 | 000 | $f''_1$ | $t_6$ |
| BS recovery beam #2 | 001 | $f'_2$ | $t_6$ |
| **BS** recovery beam #3 | 010 | $f'\,f'_3$ | $t_6$, |
| BS recovery beam #4 | 011 | $f'_4$ | $t_6$ |
| BS recovery beam #5 | 100 | $f''_5$ | $t_6$ |

In comparison to Table 5 described earlier, Table 11 shows a modified form of information regarding the BS recovery beams. Additionally, beam indexes may be configured as described in Table 5, and CSI-RS resource allocation information may be configured as described in Tables 2 to 4.

Table 11 corresponds to the case in Table 10 where the terminal's waiting time requirement $LR_{UE}$ results in a possible beam sweep count of 1. The base station 1101 may determine the candidate beam group to be used for beam recovery, focusing on the optimal transmission beam used during the beam adjustment process. Furthermore, as described in Table 10, the number of beams included in the candidate beam group for the beam recovery process may vary depending on the number of possible beam sweeps and the number of beams that can be transmitted simultaneously.

In other words, Table 11 assumes a case where a beam failure occurs for the optimal transmission beam, BS Beam #7, identified during the beam adjustment process at the base station. In this example, the terminal's waiting time requirement $LR_{UE}$ corresponds to the first case in Table 10, where the number of possible beam sweeps at the base station 1101 is 1. Accordingly, the beam candidate group for the beam recovery process within the angular search space 1120 may be newly configured from the BS recovery beam #1 to BS recovery beam #5.

Thus, the base station 1101 may allocate a time resource $t_6$ and frequency resources $f''_1$ to $f''_5$ to the candidate beams from the BS recovery beam #1 to BS recovery beam #5 and use the allocated resources to transmit the CSI-RS to the terminal through these beams.

If the terminal's waiting time requirement satisfies the second case (i.e. $2T \leq LR_{UE} < 3T$), the number of possible beam sweeps at the base station 1101 may be 2. Furthermore, the base station 1101 may be able to use 10 candidate beams. The candidate beams (i.e. BS recovery beam #1 to BS recovery beam #10) may be newly configured within the angular search space shown in Table 10. The base station 1101 may transmit the CSI-RS through these candidate beams, with the respective candidate beams allocated frequency and time resources as described earlier.

In Table 11, as an example of resource allocation, the time resource $t_6$ and frequency resources $f''_1$ to $f''_5$ are allocated to the respective candidate beams from the BS recovery beam #1 to BS recovery beam #5. A case where a time resource $t_7$ and frequency resources $f''_1$ to $f''_5$ are additionally allocated to the respective candidate beams from the BS recovery beam #6 to BS recovery beam #10 may correspond to the second case in Table 10.

The base station 1101 may transmit information on which candidate beams have been used for CSI-RS transmission to the terminal in advance through a specific message, signal, or signaling. For example, the base station may use DCI, RRC reconfiguration, or a newly defined RRC signaling (if the newly defined RRC signaling is introduced to apply the present disclosure) to transmit information on beam identifiers of the beams used for CSI-RS transmission. Additionally, during the process of transmitting the CSI-RS to the terminal, the base station 1101 may transmit the beam indexes of its beam recovery candidate beams along with the CSI-RS. The terminal may identify the recovery beams transmitted by the base station 1101 based on the beam indexes.

According to the 5G NR standard, the base station may need to transmit beams one by one to measure the performance of each candidate beam, conducting beam sweeping for all candidate beams during the beam recovery process. However, by applying the present disclosure, beams may be simultaneously transmitted in different directions based on the beam squint phenomenon. Therefore, the method according to the present disclosure can address the time overhead issue in the beam recovery process for high-frequency band communication systems such as 6G terahertz, which require higher levels of low-latency communication.

As described above, when the base station 1101 transmits recovery beams, the terminal may receive the CSI-RS through the recovery beams. The terminal may then receive the CSI-RS transmitted by the base station 1101 and measure the RSRPs of the CSI-RS.

The terminal may report the measured RSRPs to the base station along with the beam indexes. An example of such reported RSRPs may be shown in Table 12 below.

[Table 12]

| Beam recovery candidate beams of base station (beam indexes) | RSRP value |
| --- | --- |
| BS recovery beam #1 (000) | RSRP_85 |
| BS recovery beam #2 (001) | RSRP_50 |
| BS recovery beam #3 (010) | RSRP_61 |
| BS recovery beam #4 (011) | RSRP_68 |
| BS recovery beam #5 (100) | RSRP_102 |

Table 12 provides an example where the terminal measures the RSRP values upon receiving five CSI-RS transmissions from the base station 1101, as shown in Table 11. In Table 11, the beam index represents the index of each beam within the candidate beam group configured during the beam recovery process, and the RSRP corresponds to the RSRP measured for each beam index.

The terminal may report the CSI-RS RSRP for the CSI-RS transmitted by the base station 1101 through the CSI reporting process. The terminal may transmit information on the beam index through UCI. The reporting process for the RSRPs of the CSI-RS transmitted through the base station's recovery candidate beams may be configured by the base station through RRC signaling with a *UEInformationRequest* instructing the terminal to report the performances of the base station's candidate beams. The terminal may transmit information on the RSRPs of the base station's candidate beams based on the configuration of the candidate beam performance reporting instruction delivered by the base station through the RRC signaling with the *UEInformationRequest*.

As another example, information regarding the candidate beam performance reporting instruction from the base station 1101 may also be delivered to the terminal via an SIB or newly defined RRC signaling according to the present disclosure. In response to the reporting instruction, the terminal may use a measurement report, UE assistance information, or newly defined RRC signaling as described earlier.

Then, the base station 1101 may receive information on the performances of the five CSI-RS beams, which are the candidate beams configured during the beam recovery process. Based on the received performance information and beam indexes, the base station may identify the optimal candidate beam. The base station may then reselect a transmission beam based on the optimal candidate beam reported by the terminal.

According to Table 12, since the RSRP of the BS recovery beam #5 corresponding to the beam index 100 is the highest, the base station may determine that the direction of the BS recovery beam #5 is the optimal beam direction during the beam recovery process.

The procedure described above pertains to a transmission beam recovery process when a beam failure occurs in a communication link established between the base station 1101 and the terminal. However, the same approach may be extended and applied to a reception beam recovery process as well.

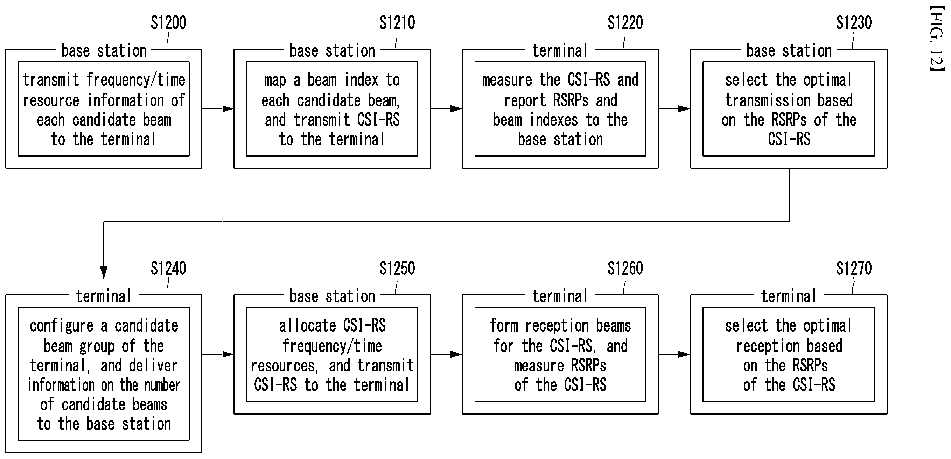

FIG. 12 is a conceptual diagram illustrating an overall procedure for low-latency beam adjustment using beam squint.

In step S1200, the base station may transmit frequency/time resource information for each candidate beam to the terminal. The frequency/time resource information for each candidate beam transmitted in step S1200 may correspond to the information illustrated in Tables 2 to 4. In other words, the base station may transmit information on BS beams, frequency resources, and time resources to the terminal. In this case, the candidate beams may be frequency-squinted beams as described earlier. Such frequency-squinted beams may need to be allocated with frequency resource intervals that are evenly spaced to achieve a uniform spreading pattern from the center frequency, as described in FIG. 11. Additionally, the base station may need to allocate frequency/time resources to ensure complete coverage of the angular search space, as shown in FIG. 11.

In step S1210, the base station may transmit index mapping information for each candidate beam to the terminal and transmit CSI-RS to the terminal. This procedure involves assigning beam indexes to the respective candidate beams of the base station and transmitting the CSI-RS along with the beam indexes, as described in Table 5. Each beam transmitting the CSI-RS may be a frequency-squinted beam, as described above. Additionally, the base station may need to appropriately control the TDN function to ensure that each squinted BS beam is configured to have a predetermined fixed angle. In this case, the base station may transmit the CSI-RS simultaneously through multiple subcarriers based on frequency resource allocation information. For example, as shown in Tables 2 to 4, the base station may transmit the CSI-RS in different directions through 5 subcarriers in a single transmission.

In step S1220, the terminal may receive the CSI-RS through each of the BS beams transmitted by the base station, based on the frequency/time resources allocated in step S1200. In this case, the terminal's beam may be a fixed beam, while the BS beams are frequency-squinted beams, as described above. The terminal may measure the RSRPs of the CSI-RS and report the measured RSRPs and their beam indexes to the base station. The information reported by the terminal to the base station may be in a form that maps the beam indexes of the base station's candidate beams to the RSRPs, as described in Table 6.

Steps S1210 and S1220 described above may be performed repeatedly. For example, if time resources are configured for more than two sweeps, steps S1210 and S1220 may be repeated. In other words, as shown in FIG. 11, if the system is configured for three sweeps, the base station may transmit the candidate beams at the time $t_1$ as described in step S1210. Accordingly, as in step S1220, the terminal may report the RSRPs for the CSI-RS of the candidate beams at a reporting time corresponding to the time $t_1$. The base station may then transmit the candidate beams at the time $t_2$ as described in step S1210. Similarly, as in step S1220, the terminal may report the RSRPs for the CSI-RS of the candidate beams at a reporting time corresponding to the time $t_2$. Finally, the base station may transmit the candidate beams at the time $t_3$ as described in step S1210. Accordingly, as in step S1220, the terminal may report the RSRPs for the CSI-RS of the candidate beams at a reporting time corresponding to the time $t_3$.

As described above, the CSI-RS transmission and the CSI-RS RSRP reporting between the base station and the terminal may be performed according to the number of sweeps.

In step S1230, the base station may select the optimal transmission beam based on the CSI-RS RSRPs reported by the terminal. For example, if the information mapping the beam indexes of candidate beams to the RSRPs reported by the terminal corresponds to Table 6, the base station may select the BS Beam #7 with the highest RSRP, as the optimal transmission beam. In this case, as described above, when the number of sweeps between the base station and the terminal has been determined, the optimal transmission beam may be selected after receiving all reports from the terminal for the determined number of sweeps.

Through the procedure described in steps S1200 to S1230 above, a procedure for adjusting the base station's transmission beam may be performed. Hereinafter, a procedure for adjusting a reception beam will be described.

In step S1240, the terminal may configure its candidate beam group and report (or deliver) the number of candidate beams to the base station. In this case, the candidate beams may be narrower beams into which the fixed beam in step S1220 is subdivided. The candidate beam group may include information such as those described in Table 7.

In step S1250, the base station may allocate frequency/time resources for CSI-RS transmission based on information on the number of candidate beams for reception beam adjustment, which is provided by the terminal. Using the allocated resources, the base station may transmit the CSI-RS to the terminal. In this case, the base station may fix its beam to the optimal transmission beam configured in step S1230.

In step S1260, the terminal may form reception beams to receive the CSI-RS transmitted by the base station and receive the CSI-RS through the frequency/time resources allocated in step S1250. The terminal may then measure the RSRPs of the CSI-RS transmitted by the base station. If the base station determines that the number of sweeps is 2 or more, steps S1250 and S1260 may be repeated.

In step S1270, the terminal may select the optimal beam based on the RSRPs of the CSI-RS transmitted by the base station. In this case, as described above, if the number of sweeps is set to 2 or more, the terminal may receive beams for the number of sweeps and determine the optimal beam based on the measured RSRPs of the CSI-RS.

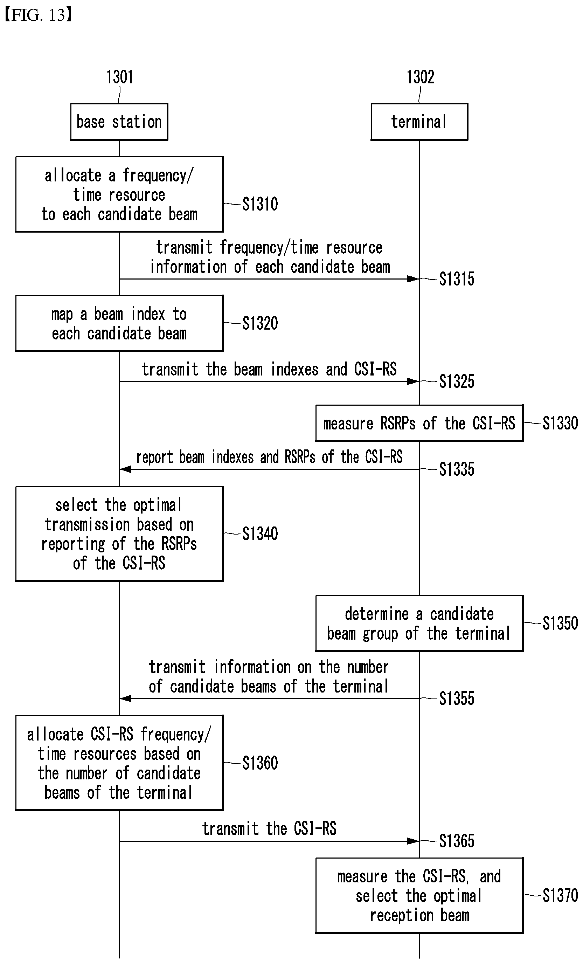

FIG. 13 is a sequence chart illustrating a method for low-latency beam adjustment using beam squint.

In FIG. 13, a base station 1301 and terminal 1302 are illustrated. The base station 1301 and terminal 1302 may each include all or part of the components of the communication nodes described in FIG. 2.

As shown in FIG. 13, in step S1310, the base station 1301 may allocate frequency/time resources to the respective candidate beams. Allocating such candidate resources may involve information as described in Tables 2 to 4. In this case, the candidate beams may be frequency-squinted beams, as described above. The frequency-squinted beams may need be allocated with frequency resources at uniform intervals to achieve a uniform spreading pattern from the center frequency, as described in FIG. 11. Additionally, the base station may need to allocate frequency/time resources to ensure full coverage of the angular search space, as described in FIG. 11.

In step S1315, the base station 1301 may transmit resource allocation information for the frequency/time resources of the candidate beams to the terminal 1302. The resource allocation information for the frequency/time resources of the candidate beams may be transmitted using DCI, MAC-CE, RRC reconfiguration message, or newly defined RRC signaling according to the present disclosure. Thus, in step S1315, the terminal 1302 may receive the resource allocation information for the candidate beams from the base station 1301.

In step S1320, the base station 1301 may map a beam index to each of the candidate beams. The number of bits required to assign the beam index may be determined based on the number of candidate beams, as described in Table 5, and the beam indexes may be determined based on the calculated number of bits. Additionally, when mapping beam indexes to the respective candidate beams, the base station 1301 may map them sequentially within the angular search space.

In step S1325, the base station 1301 may transmit the beam indexes and CSI-RS through the respective candidate beams. In this case, the candidate beams may be squinted beams based on subcarrier frequencies, as described above. Additionally, a degree of squinting for each subcarrier may be appropriately adjusted using the TDN function, as described above. Therefore, as shown in FIG. 11, the beams may be squinted and transmitted to cover a specific range in a single transmission. In step S1325, the terminal 1302 may receive the beam indexes and CSI-RS transmitted by the base station through the candidate beams.

In step S1330, the terminal 1302 may measure the RSRPs of the CSI-RS included in the received beams. The RSRPs measured for the respective candidate beams may be exemplified as shown in Table 6. In this case, the terminal 1302 may use a single fixed reception beam.

Additionally, as described above, if the candidate beams of the base station 1301 cannot be transmitted at a time, in other words, if they need to be transmitted through beam sweeping, steps S1325 and S1330 may be repeated for the number of sweeps.

In step S1335, the terminal 1302 may report the measured RSRPs for the respective candidate beams to the base station 1301. If the terminal 1302 is preconfigured to report only a preconfigured number of RSRPs, the terminal may sort the RSRPs in descending order and transmit only the preconfigured number of top RSRPs and their mapped beam indexes. For convenience of description, the present disclosure assumes the case where all RSRPs for all candidate beams are reported, as exemplified in Table 6.

In step S1340, the base station 1301 may select the optimal transmission beam based on all RSRPs for all candidate beams reported from the terminal 1302. In this case, the optimal transmission beam may be a beam with the highest RSRP. If the beam overlaps with a specific other terminal, the base station may select a beam with the second-highest RSRP or select a beam with the highest RSRP in another direction among beams that cause no interference,.

Based on the operations described above, the transmission beam of the base station 1301 may be determined. Hereinafter, an operation for determining a reception beam of the terminal will be described.

In step S1350, the terminal 1302 may determine its candidate beam group. In this case, the candidate beam group may include finer reception beams into which the fixed reception beam used in step S1330 is subdivided. In other words, the fixed reception beam used in step S1330 may be subdivided into narrower beams. The candidate beam group may be configured as described with reference to Table 7. Additionally, Table 7 is merely an example, and the number of candidate beams included in the beam candidate group may vary. For example, the candidate beam group may be configured with 5 or fewer beams. Alternatively, the candidate beam group may be configured with 7 or more beams.

In step S1355, the terminal 1302 may transmit information on the number of its candidate beams to the base station 1301. Accordingly, in step S1355, the base station 1301 may obtain the information on the number of candidate beams transmitted by the terminal 1302.

In step S1360, the base station 1301 may allocate frequency/time resources for CSI-RS transmission based on the number of candidate beams of the terminal. In this case, a beam used for CSI-RS transmission may be the optimal transmission beam determined in step S1340.

In step S1365, the base station 1301 may transmit the CSI-RS through the optimal transmission beam. Accordingly, in step S1365, the terminal 1302 may receive the CSI-RS transmitted by the base station 1301.

In step S1370, the terminal 1302 may measure the CSI-RS transmitted by the base station 1301 using the reception beams belonging to its candidate beam group. In this case, the terminal 1302 may use beam squinting to receive multiple beams simultaneously. The terminal 1302 may measure the RSRPs of the received CSI-RS and select the optimal reception beam based on the measured RSRPs.

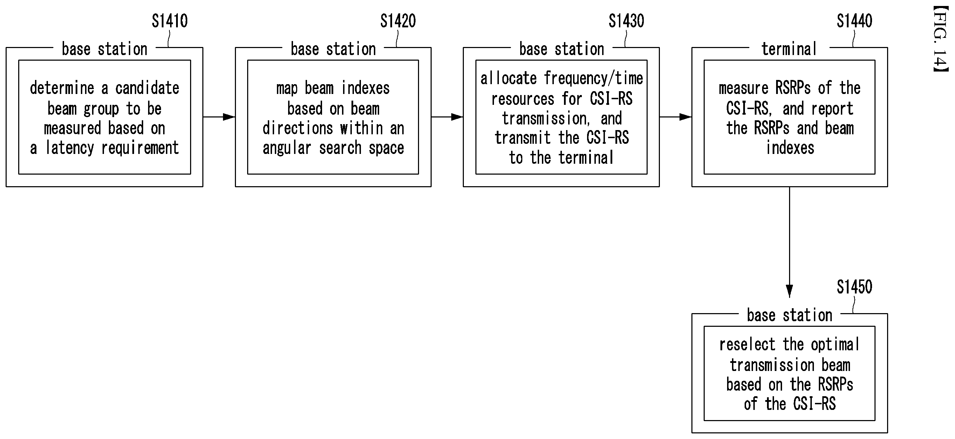

FIG. 14 is a conceptual diagram illustrating an overall procedure for low-latency beam recovery using beam squint.

In step S1410, the base station may determine a candidate beam group to be measured based on the terminal's latency requirement. In other words, the base station may determine beam directions within an angular search space based on the terminal's latency requirement and a time required for beam sweeping, as described in Table 10, and then determine the candidate beam group to be transmitted based on the determined beam directions.

In step S1420, the base station may map beam indexes based on the beam directions within the angular search space. The beam index mapping may represent the relationship between the base station's beam recovery candidate beams and their beam indexes, as described in Table 11. Therefore, the number of binary bits required to identify the beam index may be determined using the method described in Equation 3.

Meanwhile, although not shown in FIG. 14, before performing step S1430, the base station may transmit information instructing the terminal to report the performances of the recovery candidate beams. Since the reporting instruction information has been described above, redundant description is omitted.

In step S1430, the base station may allocate frequency/time resources for CSI-RS transmission and transmit the CSI-RS to the terminal using the allocated frequency/time resources.

In step S1440, the terminal may receive the CSI-RS transmitted by the base station. In other words, the terminal may measure the RSRPs of the CSI-RS transmitted by the base station and report the measured RSRPs and beam indexes to the base station. The reporting may be performed as described with reference to Table 11. Alternatively, if the number of RSRPs to be reported is preconfigured, the terminal may sort the RSRPs in descending order and report only the preconfigured number of RSRPs starting from the highest RSRP.

In step S1450, the base station may reselect the optimal transmission beam based on the RSRPs of the CSI-RS reported from the terminal.

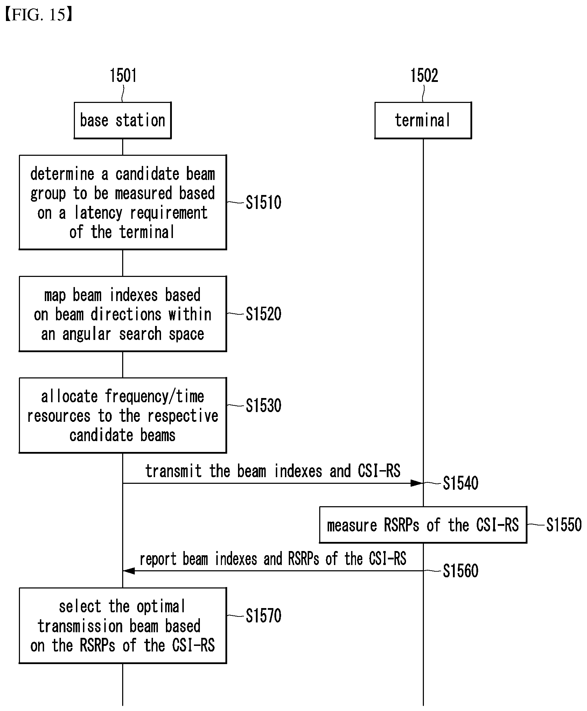

FIG. 15 is a sequence chart illustrating a low-latency beam adjustment method using beam squint.

In FIG. 15, a base station 1501 and a terminal 1502 are illustrated. The base station 1501 and the terminal 1502 may each include all or part of the components of the communication node described in FIG. 2. Additionally, the method of FIG. 15 may be performed when a beam failure occurs in a communication link between the base station and the terminal. Therefore, the sequence chart of FIG. 15 assumes a scenario in which the terminal 1502 has transmitted beam failure recovery request information to the base station 1501.

As shown in FIG. 15, in step S1510, the base station 1501 may determine a candidate beam group to be measured based on the terminal's latency requirement. In this case, the candidate beam group may be determined based on the latency requirement, the number of beam sweeps, and an angular search space.

In step S1520, the base station 1501 may map beam indexes based on beam directions within the angular search space. The beam index mapping may correspond to the relationship between the base station's beam recovery candidate beams and beam indexes described in Table 11. Accordingly, the number of binary bits required to identify the beam index may be determined using the method described in Equation 3.

In step S1530, the base station 1501 may allocate frequency/time resources to the respective candidate beams. The frequency/time resources may be allocated using the same or similar method as those described with reference to Tables 2 to 4. Additionally, as described in the beam adjustment process, frequency resources may be selected and allocated to ensure that the beams are evenly distributed.

Although not illustrated in FIG. 15, before performing step S1540, the base station may transmit information instructing the terminal to report the performance of the recovery candidate beams. Since the reporting instruction information has been described earlier, redundant description is omitted.

In step S1540, the base station 1501 may transmit beam indexes and CSI-RS through beams using the allocated resources. In this case, the beams using the allocated resources may be squinted beams, as described earlier, and may be beams adjusted to have appropriate angles using the TDN function. Accordingly, the terminal 1502 may receive the squinted beams utilizing the allocated resources. In other words, the terminal 1502 may receive the beam indexes and CSI-RS through the candidate beams.

In step S1550, the terminal 1502 may measure the RSRPs of the received CSI-RS. The measured RSRPs of the CSI-RS may be stored in the terminal 1502 as described in Table 12. If necessary, the terminal 1502 may sort the RSRPs in descending or ascending order.

In step S1560, the terminal 1502 may report the beam indexes and RSRPs of the CSI-RS to the base station 1501. If only a predetermined number of RSRPs are configured to be reported, the terminal 1502 may report only the predetermined number of RSRPs and their corresponding beam indexes starting from the highest RSRP.

In step S1570, the base station 1501 may select the optimal transmission beam based on the RSRPs of the received CSI-RS. The optimal transmission beam may be a beam with the highest RSRP.

While FIG. 15 illustrates only the method for recovering the transmission beam, the method for recovering the reception beam may also be performed in the same or a similar manner based on the beam adjustment methods described above.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

**Claims**

1. A method of a base station, comprising:

   allocating first resources for transmitting candidate beams determined based on a number of subcarriers to be beam-squinted within an angular search space and a number of sweeps of beams formed using the subcarriers to be beam-squinted;
   transmitting first resource information indicating the allocated first resources to a user equipment (UE);
   mapping a beam index to each of the candidate beams;
   transmitting information on the beam index mapped to each of the candidate beams to the UE;
   transmitting a first reference signal through the candidate beams using the first resources;
   receiving reception quality information for the first reference signal from the UE; and
   determining a transmission beam based on the reception quality information.

2. The method according to claim 1, wherein the first resource information indicates frequency resources and time resources, each of the frequency resources corresponds to a frequency of each of the subcarriers for forming the candidate beams, and each of the time resources corresponds to a transmission time of each of the candidate beams based on the number of sweeps.

3. The method according to claim 1, wherein frequencies of the subcarriers are configured so that a difference between frequencies of adjacent subcarriers has a same value.

4. The method according to claim 1, wherein when transmitting the first reference signal through the candidate beams, a time delay network (TDN) function is controlled so that main lobes of the candidate beams do not overlap each other and angles between the candidate beams have a uniform angular difference.

5. The method according to claim 1, wherein each of the first resource information allocated to the candidate beams and the information on the beam index mapped to each of the candidate beams is transmitted to the UE using at least one of downlink control information (DCI), medium access control-control element (MAC-CE), or radio resource control (RRC) reconfiguration information.

6. The method according to claim 1, further comprising:

receiving, from the UE, information on a number of candidate beams of the UE;

determining second resources for transmitting a second reference signal based on the number of candidate beams of the UE; and

transmitting the second reference signal to the UE using the determined second resources.

7. The method according to claim 6, further comprising, when the second reference signal is transmitted through the transmission beam, indicating that the transmission beam is fixed by using a repetition parameter among information elements of a reference signal resource set of RRC reconfiguration information, before transmitting the second reference signal to the UE.

8. The method according to claim 6, wherein the information on the number of candidate beams of the UE is received using at least one of uplink control information (UCI), UE assistance information, or UE capability information.

9. A method of a user equipment (UE), comprising:

receiving, from a base station, first resource information indicating first resources allocated to candidate beams transmitted by the base station;

receiving information on a beam index mapped to each of the candidate beams from the base station;

receiving a first signal from the base station through the candidate beams using a preconfigured reception beam, the first signal including a first reference signal and information on the beam index corresponding to each of the candidate beams;

measuring a reception quality of the first reference signal received through each of the candidate beams; and

transmitting, to the base station, information on the measured reception quality and information on an index of each of candidate beams corresponding to the measured reception quality,

wherein the candidate beams are determined based on a number of subcarriers to be beam-squinted within an angular search space and a number of sweeps of beams formed using the subcarriers to be beam-squinted.

10. The method according to claim 9, wherein the first resource information indicates frequency resources and time resources, each of the frequency resources corresponds to a frequency of each of the subcarriers for forming the candidate beams, and each of the time resources corresponds to a transmission time of each of the candidate beams based on the number of sweeps.

11. The method according to claim 9, wherein frequencies of the subcarriers are configured so that a difference between frequencies of adjacent subcarriers has a same value.

12. The method according to claim 9, wherein each of the first resource information allocated to the candidate beams and the information on the beam index indicated by the first signal received through each of the candidate beams is received using at least one of downlink control information (DCI), medium access control-control element (MAC-CE), or radio resource control (RRC) reconfiguration information.

13. The method according to claim 9, further comprising:

determining a UE candidate beam group by dividing the preconfigured reception beam into a plurality of subdivided beams;

transmitting information on a number of beams of the UE candidate beam group to the base station;

receiving a second reference signal using beams belonging to the UE candidate beam group;

measuring signal qualities of the second reference signal; and

determining a reception beam based on the measured signal qualities of the second reference signal.

14. The method according to claim 13, further comprising: receiving second information indicating that the transmission beam is fixed, before receiving the second reference signal.

15. The method according to claim 14, wherein the second information is indicated using a repetition parameter among information elements of a reference signal resource set of RRC reconfiguration information.

16. The method according to claim 13, wherein the information on the number of candidate beams of the UE is transmitted using at least one of uplink control information (UCI), UE assistance information, or UE capability information.

17. A user equipment (UE) comprising at least one processor, wherein the at least one processor causes the UE to perform:

receiving, from a base station, first resource information indicating first resources allocated to candidate beams transmitted by the base station;
receiving information on a beam index mapped to each of the candidate beams from the base station;
receiving a first signal from the base station through the candidate beams using a preconfigured reception beam, the first signal including a first reference signal and information on the beam index corresponding to each of the candidate beams;
measuring a reception quality of the first reference signal received through each of the candidate beams; and
transmitting, to the base station, information on the measured reception quality and information on an index of each of candidate beams corresponding to the measured reception quality,
wherein the candidate beams are determined based on a number of subcarriers to be beam-squinted within an angular search space and a number of sweeps of beams formed using the subcarriers to be beam-squinted.

18. The UE according to claim 17, wherein the first resource information indicate frequency resources and time resources, each of the frequency resources corresponds to a frequency of each of the subcarriers for forming the candidate beams, and each of the time resources corresponds to a transmission time of each of the candidate beams based on the number of sweeps.

19. The UE according to claim 17, wherein the at least one processor further causes the UE to perform:

determining a UE candidate beam group by dividing the preconfigured reception beam into a plurality of subdivided beams;
transmitting information on a number of beams of the UE candidate beam group to the base station;
receiving a second reference signal using beams belonging to the UE candidate beam group;
measuring signal qualities of the second reference signal; and
determining a reception beam based on the measured signal qualities of the second reference signal.

20. The UE according to claim 19, wherein the at least one processor further causes the UE to perform: receiving second information indicating that the transmission beam is fixed, before receiving the second reference signal,
wherein the second information is indicated using a repetition parameter among information elements of a reference signal resource set of RRC reconfiguration information.

【FIG. 1】

【FIG. 2】

【FIG. 3】

【FIG. 4a】

[FIG. 4b]

【FIG. 5】

【FIG. 6】

subframe (1ms)

| slot #0 | slot #1 | ... | slot #n |

【FIG. 7】

slot

| #0 | #1 | #2 | #3 | #4 | #5 | #6 | #7 | #8 | #9 | #10 | #11 | #12 | #13 |

OFDM symbol

【FIG. 8】

REG

N subcarriers

RE

N OFDM symbols

【FIG. 9a】

【FIG. 9b】

【FIG. 10】

【FIG. 11】

[FIG. 12]

EP 4 614 822 A1

S1200

**base station**
transmit frequency/time
resource information of
each candidate beam
to the terminal

S1210

**base station**
map a beam index to
each candidate beam,
and transmit CSI-RS
to the terminal

S1220

**terminal**
measure the CSI-RS and
report RSRPs and
beam indexes to the
base station

S1230

**base station**
select the optimal
transmission based
on the RSRPs of the
CSI-RS

S1240

**terminal**
configure a candidate
beam group of the
terminal, and deliver
information on the number
of candidate beams
to the base station

S1250

**base station**
allocate CSI-RS
frequency/time
resources, and transmit
CSI-RS to the terminal

S1260

**terminal**
form reception beams
for the CSI-RS, and
measure RSRPs
of the CSI-RS

S1270

**terminal**
select the optimal
reception based
on the RSRPs
of the CSI-RS

【FIG. 13】

[FIG. 14]

EP 4 614 822 A1

S1410

base station

determine a candidate
beam group to be
measured based on
a latency requirement

→

S1420

base station

map beam indexes
based on beam
directions within an
angular search space

→

S1430

base station

allocate frequency/time
resources for CSI-RS
transmission, and
transmit the CSI-RS
to the terminal

→

S1440

terminal

measure RSRPs of the
CSI-RS, and report
the RSRPs and beam
indexes

↓

S1450

base station

reselect the optimal
transmission beam
based on the RSRPs
of the CSI-RS

【FIG. 15】

## INTERNATIONAL SEARCH REPORT

| International application No. |
| --- |
| **PCT/KR2023/017164** |

| A. | CLASSIFICATION OF SUBJECT MATTER |
| --- | --- |

**H04B 7/0408**(2017.01)i; **H04B 7/06**(2006.01)i; **H04B 7/08**(2006.01)i; **H04B 17/318**(2015.01)i

According to International Patent Classification (IPC) or to both national classification and IPC

| B. | FIELDS SEARCHED |
| --- | --- |

Minimum documentation searched (classification system followed by classification symbols)

H04B 7/0408(2017.01); H01Q 3/34(2006.01); H04B 17/318(2015.01); H04B 7/06(2006.01); H04B 7/08(2006.01); H04L 5/00(2006.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 빔 스퀸트(beam squint), 각도 탐색 공간(angular search space), 서브캐리어 (subcarrier), 스위핑(sweeping), 후보 빔(candidate beam), 수신 품질 정보(receive quality information)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | US 2022-0200682 A1 (QUALCOMM INCORPORATED) 23 June 2022 (2022-06-23)<br>See paragraphs [0059]-[0093]; and figures 5-7. | 1-20 |
| A | US 2022-0344809 A1 (LEONARDO S.P.A.) 27 October 2022 (2022-10-27)<br>See paragraphs [0003] and [0034]-[0063]; and figures 1-11. | 1-20 |
| A | US 2022-0263591 A1 (HUAWEI TECHNOLOGIES CO., LTD.) 18 August 2022 (2022-08-18)<br>See paragraphs [0081]-[0172]; and figures 3-9. | 1-20 |
| A | KR 10-2022-0137727 A (FRAUNHOFER-GESELLSCHAFT ZUR FÖRDERUNG DER ANGEWANDTEN FORSCHUNG E. V.) 12 October 2022 (2022-10-12)<br>See paragraphs [0024]-[0356]; and figures 2a-16. | 1-20 |
| A | US 2022-0015100 A1 (QUALCOMM INCORPORATED) 13 January 2022 (2022-01-13)<br>See paragraphs [0130]-[0169]; and figures 2-4. | 1-20 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **20 February 2024** | **20 February 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/017164**

| Patent document cited in search report | | | Publication date (day/month/year) | Patent family member(s) | | | Publication date (day/month/year) |
|---|---|---|---|---|---|---|---|
| US | 2022-0200682 | A1 | 23 June 2022 | CN | 116830472 | A | 29 September 2023 |
| | | | | EP | 4268378 | A1 | 01 November 2023 |
| | | | | US | 11496194 | B2 | 08 November 2022 |
| | | | | WO | 2022-139948 | A1 | 30 June 2022 |
| US | 2022-0344809 | A1 | 27 October 2022 | CN | 114128048 | A | 01 March 2022 |
| | | | | EP | 3963671 | A1 | 09 March 2022 |
| | | | | EP | 3963671 | B1 | 05 October 2022 |
| | | | | HU | E060942 | T2 | 28 April 2023 |
| | | | | IL | 288430 | A | 01 January 2022 |
| | | | | IL | 288430 | B1 | 01 December 2023 |
| | | | | IT | 201900024577 | A1 | 18 June 2021 |
| | | | | WO | 2021-124256 | A1 | 24 June 2021 |
| US | 2022-0263591 | A1 | 18 August 2022 | CN | 114026927 | A | 08 February 2022 |
| | | | | CN | 114026927 | B | 23 September 2022 |
| | | | | EP | 4044704 | A1 | 17 August 2022 |
| | | | | EP | 4044704 | A4 | 28 September 2022 |
| | | | | WO | 2021-081811 | A1 | 06 May 2021 |
| KR | 10-2022-0137727 | A | 12 October 2022 | CN | 115398822 | A | 25 November 2022 |
| | | | | EP | 4104307 | A1 | 21 December 2022 |
| | | | | US | 2023-0043847 | A1 | 09 February 2023 |
| | | | | WO | 2021-160689 | A1 | 19 August 2021 |
| US | 2022-0015100 | A1 | 13 January 2022 | CN | 115769505 | A | 07 March 2023 |
| | | | | EP | 4179678 | A1 | 17 May 2023 |
| | | | | KR | 10-2023-0034235 | A | 09 March 2023 |
| | | | | WO | 2022-010671 | A1 | 13 January 2022 |

Form PCT/ISA/210 (patent family annex) (July 2022)